# EUROPÄISCHE PATENTSCHRIFT

(11) **EP 3 554 847 B1**
(45) Veröffentlichungstag und Bekanntmachung des Hinweises auf die Patenterteilung: **25.11.2020**
(21) Anmeldenummer: 17838036.6
(22) Anmeldetag: 13.12.2017
(51) Int. Cl.: B60B 7/00

(54) **FAHRZEUGRAD**
VEHICLE WHEEL
ROUE DE VÉHICULE

(30) Priorität: 13.12.2016 DE 102016124121
(43) Veröffentlichungstag der Anmeldung: 23.10.2019
(73) Patentinhaber: GV Engineering GmbH, 71296 Heimsheim (DE)
(72) Erfinder: TSIBERIDIS, Konstantin, 74199 Untergruppenbach (DE)
(74) Vertreter: Beyer, Andreas
(86) Internationale Anmeldenummer: PCT/EP2017/082675
(87) Internationale Veröffentlichungsnummer: WO 2018/109032

(56) Entgegenhaltungen:
- WO-A2-2016/005565
- DE-A1-102011 010 509
- DE-A1-102016 003 963
- FR-A1- 2 886 214

## Beschreibung

Die Erfindung betrifft ein Fahrzeugrad nach dem Oberbegriff des Anspruchs 1.

Die Konzeption moderner Felgen unterliegt unterschiedlichen, einander teilweise entgegenlaufenden Anforderungen. Zum einen soll die Felge eine Felgenkontur aufweisen, die eine einfache Herstellung ermöglicht, zum anderen ist eine zentrale Forderung, dass die Felge eine möglichst hohe Luftdurchströmung ermöglicht, um im Bedarfsfall eine Bremsscheibe einer Fahrzeugbremse optimal über den Luftstrom kühlen zu können.

Ferner muss beim Nachheizen der Bremsscheibe im Stand dafür gesorgt werden, dass die Wärme auch ohne Luftströmung abtransportiert werden kann. Das heißt, dass hieraus die Forderung nach einer möglichst "offenen" Felgenstruktur resultiert, dass also die Zwischenräume einen möglichst großen Teil der Felge ausmachen.

Aus aerodynamischen Gründen jedoch sollte die Felge möglichst geschlossen sein, um Luftverwirbelungen, die durch die Zwischenräume, die oft auch als Felgendurchbrüche bezeichnet werden, entstehen, möglichst zu verhindern.

Im normalen Fahrbetrieb herrscht im Bereich des Unterbodens des Fahrzeugs ein Überdruck, der dafür sorgt, dass Luft durch die Zwischenräume der Felge gedrückt wird. Dies führt zu hohen Luftverwirbelungen. Würde die Felge als geschlossene Scheibe ausgeführt, so könnte der Cw-Wert, der als Faktor in das Zu-Stande-Kommen des Luftwiderstands des Fahrzeugs eingeht, verbessert werden.

Um diesen einerseits aus thermischen, andererseits aus aerodynamischen Gründen einander quasi widersprechenden Anforderungen gerecht zu werden, ist es bekannt, durch Verwendung beweglicher Abdeckelemente die felgenseitigen Durchbrechungen bedarfsabhängig öffnen und schließen zu können.

Bekannt sind beispielsweise Abdeckelemente, die Fliehkraft getrieben öffnen und schließen. Diese Abdeckelemente öffnen also beispielsweise bei Überschreiten einer gewissen Grenzgeschwindigkeit durch die auf sie wirkende Fliehkraft.

Derartige Systeme arbeiten jedoch nicht zuverlässig und können auch nur ab einer gewissen Geschwindigkeit die Abdeckelemente öffnen oder schließen.

Aus der FR 2 886 214 A1 ist ein Fahrzeugrad nach dem Oberbegriff des Patentanspruchs 1 bekannt. Bei diesem Fahrzeugrad können offene Felgenzwischenräume, die an einer Fahrzeugfelge vorhanden sind, wahlweise mittels Abdeckelementen verschlossen werden, wobei diese Abdeckelemente pneumatisch betätigt sein können.

Aufgabe der vorliegenden Erfindung ist es daher ein Fahrzeugrad bereitzustellen, das zuverlässig arbeitet und sowohl den Anforderungen an die Aerodynamik als auch an die Kühlung der Bremsen gerecht wird.

Diese Aufgabe wird erfindungsgemäß durch ein Fahrzeugrad nach Anspruch 1 gelöst. Das erfindungsgemäße Fahrzeugrad kennzeichnet sich also dadurch, dass eine Betätigungseinrichtung zur pneumatischen Betätigung des Abdeckelements mit Druckmittel aus einer Reifenkavität des Fahrzeugrads betätigbar ist. Die Reifenkavität stellt quasi ein stets vorhandenes Energiereservoir dar, das zur Betätigung der Abdeckelemente verwendet werden kann.

Vorteilhafterweise erstreckt sich ein Druckmittelkanal von der Reifenkavität zu der Betätigungseinrichtung des Abdeckelements. Dabei ist es bevorzugt, wenn der Druckmittelkanal wenigstens abschnittsweise, vorzugsweise vollständig im Material der Felge, vorzugsweise, wenigstens teilweise, im Material eines der Tragabschnitte, verläuft. Eine derartige Verbindung ist robust und platzsparend, außerdem kann der Druckmittelkanal hierdurch wartungsarm gestaltet werden.

Von Vorteil ist außerdem, wenn das Fahrzeugrad eine Verdichteranordnung zur Bereitstellung von unter Druck stehendem Druckmittel umfasst. Dies ermöglicht es, bei Bedarf Druckmittel, insbesondere Druckluft, der Reifenkavität zuzuführen. Vorteilhafterweise arbeitet die Verdichteranordnung dabei nicht ständig, sondern ist bei Bedarf entweder einschaltbar oder schaltet sich bei Bedarf automatisch ein.

Im Sinne der vorliegenden Erfindung ist auch denkbar, wenn das Fahrzeug, an dem das erfindungsgemäße Fahrzeugrad angebracht ist, einen zentralen Drucklufterzeuger umfasst, welcher derart mit den einzelnen Fahrzeugrädern des Fahrzeugs verbunden ist, dass Druckmittel, insbesondere Druckluft, von dem Drucklufterzeuger zu den einzelnen Fahrzeugrädern geführt werden kann. Hierzu können beispielsweise Drehdurchführungen für das Druckmittel genutzt werden. Derartige Drehdurchführungen sind aus dem Stand der Technik bekannt. Die von dem zentralen Drucklufterzeuger bereitgestellte Druckluft kann entweder direkt zum Betätigen der pneumatisch betätigbaren Abdeckelemente genutzt werden oder die Reifenkavität kann bei Bedarf mit Druckluft versorgt werden.

Vorteilhaft ist, wenn die Verdichteranordnung wenigstens einen nabenseitigen Kompressionsraum umfasst. Der Kompressionsraum dreht sich also bei Rotation des Fahrzeugrades mit diesem mit. Damit entfällt die Notwendigkeit zum vorsehen von Drehdurchführungen zur Zuführung von Druckmittel zur Reifenkavität. Mit Kompressionsraum ist dabei jeglicher Raum gemeint, indem ein Druckmittel unter Druck setzbar ist.

Im Kontext der vorliegenden Anmeldung sind unter Nabenseite und nabenseitigen Komponenten derartige Komponenten zu verstehen, die gegenüber der Radnabe drehfest angeordnet sind. Derartige Komponenten sind also unmittelbar oder mittelbar mit der Radnabe derart verbunden, dass sie sich bei einer Rotation der Radnabe relativ zum Radträger mit der Radnabe drehen. Der Radträger ist fahrzeugfest. Radträgerseite und radträgerseitige Komponenten sind damit gegenüber dem Radträger drehfest. Bei einer Rotation des Rades bzw. der Radnabe erfolgt also eine rotatorische Relativbewegung zwischen den radträgerseitigen Komponenten, bspw. der Fahrgastzelle des Fahrzeugs und dem Rad bzw. dem Reifen, der Radnabe und den weiteren nabenseitigen Komponenten.

Das radträgerseitige Getriebeteil ist also im am Fahrzeug angebrachten Zustand vollständig drehfest mit den radträgerseitigen Komponenten verbunden. Im Fahrbetrieb des Fahrzeugs dreht sich also kein Teil des radträgerseitigen Getriebeteils. Es drehen sich lediglich die nabenseitigen Komponenten um die Rotationsachse.

Vorteilhaft ist, wenn die Verdichteranordnung ein Verdichterbauteil umfasst und durch eine, vorzugsweise translatorische, Bewegung des Verdichterbauteils das Druckmittel unter Druck setzbar ist. Durch kann die Verdichteranordnung besonders effizient arbeiten.

Besonders vorteilhaft ist eine Ausbildung der Verdichteranordnung, bei der der Kompressionsraum als Kolbenraum ausgebildet ist und in dem Kolbenraum ein Kolben oszillierend translatorisch bewegbar angeordnet ist, wobei durch die oszillierend translatorische Bewegung ein Druckmittel unter Druck setzbar ist. Vorteilhafterweise sind dabei sowohl der Kolbenraum als auch der Kolben derart ausgebildet und angeordnet, dass sie sich bei drehendem Fahrzeugrad mit dem Fahrzeugrad mitdrehen, mit anderen Worten das sie nabenseitig angeordnet sind.

Vorteilhaft ist, wenn das Fahrzeugrad um eine Rotationsachse drehbar an einem Radträger lagerbar ist, und die Verdichteranordnung ein Getriebe, vorzugsweise ein Kurvengetriebe, umfasst, das eingerichtet ist, um durch ein Zusammenwirken eines radträgerseitigen Getriebeteils mit einem nabenseitigen Getriebeteil eine Rotationsbewegung zwischen Radträgerseite und Radnabenseite in eine, vorzugsweise oszillierende translatorische, Bewegung des Verdichterbauteils umzuwandeln. Hierdurch kann die Verdichteranordnung besonders effizient durch Ausnutzung der rotatorischen Relativbewegung zwischen Radträgerseite und Radnabenseite betrieben werden.

Dabei ist es insbesondere vorteilhaft, wenn das Zusammenwirken des radträgerseitigen Getriebeteils mit dem nabenseitigen Getriebeteils schaltbar ist. Die Verdichteranordnung quasi durch Schaltung der beiden Getriebeteile an und ausgeschaltet werden kann. Werden die beiden Getriebeteile in Zusammenwirkung gebracht, sondern die Verdichteranordnung ihre Arbeit auf. Wird die Zusammenwirkung unterbrochen so stellt die Verdichteranordnung ihre Arbeit ein. Bevorzugterweise ist diese Schaltbarkeit über eine Kupplungseinrichtung der Verdichteranordnung realisiert.

Vorteilhaft ist, wenn die Verdichteranordnung derart ausgebildet ist, dass das Verdichterbauteil zur Durchführung einer oszillierend translatorischen Bewegung in radialer Richtung ausgebildet und angeordnet ist, wobei die oszillierend translatorischen Bewegung erfolgt, wenn sich die Verdichteranordnung im Betrieb befindet. Hierdurch kann besonders viel Druckmittel in kurzer Zeit unter Druck bereitgestellt werden. Bevorzugt ist dabei insbesondere, wenn der Kompressionsraum radial auswärts liegend von dem Verdichterbauteil angeordnet ist.

Alternativ hierzu kann die Verdichteranordnung derart ausgebildet sein, dass das Verdichterbauteil zur Durchführung einer oszillierend translatorischen Bewegung in axialer Richtung ausgebildet und angeordnet ist, sich also das Verdichterbauteil in Richtung der Rotationsachse des Fahrzeugrads bewegt, wenn sich die Verdichteranordnung im Betrieb befindet. Hierdurch kann die Verdichteranordnung besonders kompakt und platzsparend ausgebildet werden. Dabei ist besonders bevorzugt, wenn das Verdichterbauteil als Ringkolben ausgebildet ist und der Kompressionsraum als Ringkolbenraum. Vorteilhaft ist auch eine Ausbildung der Verdichteranordnung nach der Art einer Doppelkolbenpumpe. Bei dieser Ausführungsform verdichtet das Verdichterbauteil also Druckmittel bei seiner oszillierend translatorischen Bewegung sowohl bei einer Vorwärts- als auch bei einer Rückwärtsbewegung. Hierzu sind wenigstens zwei, bezüglich des Verdichterbauteils sich gegenüberliegend angeordnete Kompressionsräume in der Verdichteranordnung vorgesehen.

Vorteilhaft ist auch, wenn die Verdichteranordnung elektrisch angetrieben ist. Die Verdichteranordnung kann damit flexibel im Fahrzeugrad angeordnet werden. Bevorzugterweise jedoch ist die Verdichteranordnung, falls sie elektrisch angetrieben ist im Bereich der Radnabenaufnahme, vorzugsweise in der Radnabenaufnahme angeordnet.

Vorteilhaft ist auch, wenn das Fahrzeugrad eine, vorzugsweise kontaktlose, Energieübertragungseinrichtung umfasst, über die elektrische Energie zum Betrieb der Verdichteranordnung von einer radträgerseitigen Energiequelle zur Verdichteranordnung übertragbar ist. Hierdurch kann beispielsweise die zentrale Hauptbatterie des Fahrzeugs verwendet werden, um die Verdichteranordnung zu betreiben.

Vorteilhaft ist auch, wenn das Fahrzeugrad eine nabenseitige Energiequelle zur Bereitstellung von elektrischer Energie zum Betrieb der Verdichteranordnung umfasst. Wenn also eine Energiequelle vorgesehen ist, die sich mit dem Fahrzeugrad mit dreht.

Vorteilhaft ist, wenn die nabenseitige Energiequelle einen Generator umfasst, durch den die Rotationsbewegung zwischen Radträgerseite und Radnabenseite in elektrische Energie umwandelbar ist. Hierdurch kann bei Bedarf stets elektrische Energie bereitgestellt werden.

Vorteilhaft ist, wenn das Abdeckelement den Zwischenraum in der ersten Position des Abdeckelements weiter bedeckt als in der zweiten Position des Abdeckelements. Besonders bevorzugt ist dabei, wenn das Abdeckelement den Zwischenraum in der ersten Position komplett bedeckt bzw. verschließt.

Vorteilhaft ist, wenn das Abdeckelement in eine, vorzugsweise die erste, Position vorgespannt ist. Bevorzugterweise ist das Abdeckelement also in die Position vorgespannt, in der es den Zwischenraum weiter bedeckt als in der zweiten Position. Bevorzugt ist das Abdeckelement in eine Position vorgespannt, in der es den Zwischenraum komplett bedeckt. Bei Bedarf kann das Abdeckelement dann pneumatische betätigt werden, wodurch der Zwischenraum freigegeben bzw. geöffnet wird, wodurch wiederum die Bremse bei Bedarf gekühlt werden kann.

Alternativ kann das Abdeckelement auch in die zweite Position vorgespannt sein, in der der Zwischenraum also jedenfalls nicht komplett bedeckt ist. Ist das Abdeckelement derart vorgespannt, so wird das Abdeckelement lediglich bei Beaufschlagung mit Druck pneumatisch betätigt und in die erste Position überführt, in der es den Zwischenraum weiter bedeckt bzw. vorteilhafterweise vollständig bedeckt.

Vorteilhaft ist, wenn das Abdeckelement durch eine rotatorische Bewegung gegenüber den Tragabschnitten zwischen der ersten Position und der zweiten Position bewegbar ist. Insbesondere, wenn mehrere Abdeckelemente und Zwischenräume an dem Fahrzeugrad vorhanden sind, so kann bei dieser Ausführungsform eine Abdeckvorrichtung vorgesehen sein, die mehrere Abdeckelemente umfasst, wodurch diese gemeinsam bewegt werden können.

Vorteilhaft ist, wenn das Fahrzeugrad mehrere Abdeckelemente umfasst, die derart miteinander verbunden sind, dass sie gemeinsam um die Rotationsachse rotierbar sind.

Generell ist vorteilhaft, wenn das erfindungsgemäße Fahrzeugrad mehrere Zwischenräume mit ihnen jeweils zugeordneten Abdeckelementen aufweist, wobei besonders bevorzugt ist, wenn die Abdeckelemente derart miteinander gekoppelt sind, dass sie gleichzeitig pneumatische betätigbar sind. Alternativ können die einzelnen Abdeckelemente jedoch auch individuell und unabhängig voneinander pneumatisch betätigbar sein.

Vorteilhaft ist, wenn das Abdeckelement durch eine translatorische Bewegung, vorzugsweise in Richtung der Rotationsachse, gegenüber den Tragabschnitten zwischen der ersten Position und der zweiten Position bewegbar ist. Hierdurch kann die Bewegung der Abdeckelemente besonders einfach pneumatisch verursacht werden.

Vorteilhaft ist, wenn das Abdeckelement durch eine Kippbewegung gegenüber den Tragabschnitten zwischen der ersten Position und der zweiten Position bewegbar ist. Hierdurch ist es unter anderem möglich, eine Positionierung der Abdeckelemente zu implementieren, in der sie in der zweiten Stellung Luft zu den Bremsen leiten.

Vorteilhaft ist, wenn das Fahrzeugrad mehrere Zwischenräume aufweist, denen jeweils ein Abdeckelement zugeordnet ist, das durch pneumatische Betätigung von einer ersten Position in eine zweite Position überführbar ist.

Vorteilhaft ist, wenn das Fahrzeugrad eine Kopplungseinrichtung aufweist, über die das Abdeckelement mit einer Bremse eines Fahrzeugs an dem das Fahrzeugrad angeordnet ist, koppelbar ist, wobei die Kopplungseinrichtung ausgebildet ist, um eine Betätigungseinrichtung des Abdeckelements, derart anzusteuern, dass das Abdeckelement von der ersten Position in die zweite Position überführt wird, in Abhängigkeit von der Betätigung der Bremse und/oder bei Überschreiten einer Temperaturschwelle im Bereich der Bremse. Hierdurch kann das Abdeckelement quasi bedarfsabhängig betätigt bzw. geöffnet und geschlossen werden.

Vorteilhaft ist, wenn das Abdeckelement, vorzugsweise abgestuft, über Zwischenpositionen zwischen der ersten Position und der zweiten Position überführbar ist.

Vorteilhaft ist, wenn das Abdeckelement in der zweiten Position derart gegenüber dem Tragelement angeordnet ist, dass es im Betrieb des Fahrzeugrades durch die Rotation des Fahrzeugrades Luft zur Bremsanlage leitet.

Vorteilhaft ist, wenn das Fahrzeugrad eine Staubsammelvorrichtung umfasst, die ausgebildet ist, um Staubpartikel aus der im Innenbereich der Felge vorhandenen Luft zu sammeln. Ist das Abdeckelement geschlossen, so zirkuliert der anfallende Bremsstaub im Bereich hinter der Felge und kann über die Staubsammelvorrichtung gesammelt werden. Hierdurch kann eine Feinstaubemission stark reduziert werden.

Vorteilhaft ist, wenn die Staubsammelvorrichtung einen Luftfilter und/oder einen magnetischen Staubsammler umfasst. Hierdurch kann der anfallende Feinstaub bzw. Bremstaub besonders effizient ausgefiltert werden.

Sinne der Erfindung ist auch ein Fahrzeug mit einem Fahrzeugrad gemäß einer oder mehrerer der oben beschriebenen Ausführungsformen, wobei die Position des Abdeckelements durch eine Steuereinrichtung, vorzugsweise in Abhängigkeit von der Geschwindigkeit des Fahrzeugs, vorgebbar ist.

Nachfolgend werden vorteilhafte Ausgestaltungen und Einzelheiten der Verdichteranordnung im Detail beschrieben. Vorteilhafterweise ist die Verdichteranordnung derart ausgeführt, dass sie eine Kupplungseinrichtung umfasst, mittels welcher das nabenseitige Getriebeteil in Zusammenwirkung mit dem radträgerseitigen Getriebeteil bringbar ist. Hierdurch kann der Betrieb der Verdichteranordnung situationsbedingt aufgenommen bzw. abgestellt werden. Hiermit ist es möglich die Verdichteranordnung lediglich dann zu betreiben, wenn ein Solldruck in der zu füllenden Reifenkavität unterschritten ist. Die Verdichteranordnung kann dann betrieben werden, bis der Solldruck erreicht ist und kann anschließend abgeschaltet bzw. ausgekuppelt werden.

Dabei ist es besonders bevorzugt, wenn die Kupplungseinrichtung der Verdichteranordnung pneumatisch, magnetisch, elektrisch oder elektromechanisch betätigbar ist, vorzugsweise ein nabenseitiges Kupplungselement umfasst, das, vorzugsweise pneumatisch oder elektrisch oder elektromechanisch, von einer Sperrstellung in eine Freigabestellung überführbar ist, wobei das nabenseitige Getriebeteil mit dem radträgerseitigen Getriebeteil zusammenwirkt, wenn sich das Kupplungselement in der Freigabestellung befindet, und wobei das nabenseitige Getriebeteil an dem Zusammenwirken mit dem radträgerseitigen Getriebeteil gehindert ist, wenn sich das Kupplungselement in der Sperrstellung befindet. Hierdurch kann in effizienter Art und Weise ein Zusammenwirken zwischen nabenseitigem und radträgerseitigem Getriebeteil über das Kupplungselement geschaltet werden.

Es ist besonders vorteilhaft wenn, das nabenseitige Kupplungselement der Verdichteranordnung in die Sperrstellung, insbesondere über eine Feder, vorgespannt ist. Im Grundzustand ist damit eine Zusammenwirkung des nabenseitigen und radträgerseitigen Getriebeteils unterbunden. Damit wird im normalen Fahrbetrieb keine unnötige Energie verbraucht. Lediglich bei Bedarf kann über die Kupplungseinrichtung bzw. das Kupplungselement das nabenseitige Getriebeteil in Zusammenwirkung mit dem radträgerseitigen Getriebeteil gebracht werden.

Es ist vorteilhaft, wenn das nabenseitige Getriebeteil der Verdichteranordnung in eine Stellung vorgespannt ist, in der es mit dem radträgerseitigen Getriebeteil zusammenwirkt. Damit genügt ein Steuerimpuls an die Kupplungseinrichtung der Verdichteranordnung und das nabenseitige Getriebeteil gelangt in Zusammenwirkung mit dem radträgerseitigen Getriebeteil.

Vorteilhaft ist, wenn das nabenseitige Kupplungselement der Verdichteranordnung derart ausgestaltet ist, dass es wenn es in die Sperrstellung übergeht, das nabenseitige Getriebeteil in eine Position drängt, in der es unabhängig von der Stellung des radträgerseitigen Getriebeteils keinen Kontakt mit dem radträgerseitigen Getriebeteil hat. Hierdurch wird unnötiger Verschleiß des nabenseitigen Getriebeteils verhindert. Außerdem ist eine derartige Verdichteranordnung im Freilaufbetriebszustand, also im ausgekuppelten Zustand geräuschlos, da kein Kontakt zwischen nabenseitigem Getriebeteil und radträgerseitigem Getriebeteil stattfindet.

Im Sinne der Erfindung ist außerdem, wenn der Sperrabschnitt des nabenseitigen Kupplungselements graduell in einen Freigabeabschnitt des nabenseitigen Kupplungselements übergeht, wobei der Freigabeabschnitt in Richtung der translatorischen Bewegung des Verdichterbauteils gesehen versetzt zu dem Sperrabschnitt angeordnet ist. Hierdurch wird ein gleitendes Übergehen des Kupplungselements von der Freigabestellung in die Sperrstellung ermöglicht. Insbesondere die Kombination dieser Ausführungsform mit der Federvorspannung des Kupplungselements bietet besondere Vorteile. Wird das Kupplungselement nicht durch Beaufschlagung mit Druck über das Druckmittel in die Freigabestellung gebracht bzw. in dieser gehalten, so gleitet es automatisch und ruckfrei in die Sperrstellung. Ein derartiger gradueller Übergang zwischen den Stellungen führt zum geräuscharmen Betrieb bzw. Schalten der Verdichteranordnung. Auch kann hierdurch der Verschleiß der Verdichteranordnung gering gehalten werden.

Vorteilhaft ist auch, wenn die Kupplungseinrichtung der Verdichteranordnung über eine Druckleitung mittels Druckmittel aus der Reifenkavität betätigbar ist, insbesondere das Kupplungselement der Verdichteranordnung mittels Druckmittel aus der Reifenkavität von der Sperrstellung in die Freigabestellung überführbar ist. Die Betätigung der Kupplungseinrichtung mittels Druckmittel aus der Reifenkavität stellt eine vorteilhafte Möglichkeit zur Betätigung der Kupplungseinrichtung der Verdichteranordnung dar, da keine externe Energieversorgung zur Betätigung nötig ist.

Besonders vorteilhaft ist, wenn ein Kupplungsventil fluidisch zwischen Kupplungseinrichtung der Verdichteranordnung und Reifenkavität vorgesehen ist, an dem das Druckmittel aus der Reifenkavität anliegt und welches bei Unterschreiten eines Reifendruckschwellenwerts öffnet, wodurch die Kupplungseinrichtung mittels Druckmittel aus der Reifenkavität betätigt wird und das nabenseitige Getriebeteil in Zusammenwirkung mit dem radträgerseitigen Getriebeteil gebracht wird. Hierdurch ist es möglich, ohne externe Energieversorgung eine Versorgung der Reifenkavität mit Druckmittel und ausreichendem Druck sicherzustellen, da sobald der Druck in der Reifenkavität unter einen Reifendruckschwellenwert fällt der Reifen automatisch mit weiteren Druckmittel versorgt wird. Hierdurch wird ein gesonderter Regelmechanismus überflüssig. Die Verdichteranordnung kann effizient wartungsarm und zuverlässig mit kostengünstiger Bauweise arbeiten.

Vorteilhaft ist auch, wenn das Kupplungsventil derart ausgebildet ist, dass es bei Überschreiten eines Reifendrucksollwerts, vorzugsweise der über dem Reifendruckschwellenwert liegt, schließt, wodurch die Beaufschlagung der Kupplungseinrichtung mit Druckmittel unterbrochen wird, vorzugsweise wobei das Kupplungsventil oder ein Entlastungsventil derart ausgebildet ist, dass bei Überschreiten des Reifendrucksollwerts die Kupplungseinrichtung entlüftet wird. Hierdurch wird der Betrieb der Verdichteranordnung bei Erreichen des Reifendrucksollwerts quasi automatisch und sofort eingestellt. Die Kombination dieser Ausführungsform mit einer Ausführungsform, bei der das nabenseitige Getriebeteil in eine Stellung vorgespannt ist, in der es mit dem radträgerseitigen Getriebeteil zusammenwirkt bietet besondere Vorteile, da die Verdichteranordnung besonders reaktionsschnell ein Erreichen bestimmter Druckwerte in der Reifenkavität reagiert. Bei der zuletzt beschriebenen forderten Ausführungsform wird also stets sichergestellt, dass bei Bewegung des Kupplungselements in die Freigabestellung oder generell bei Freigabe des nabenseitigen Getriebeteils dieses in eine Stellung übergeht, in der es in den radträgerseitigen Getriebeteil zusammenwirkt. Hierdurch ergibt sich in gewisser Weise auch eine gewisse Notlaufeigenschaft durch die Verwendung der erfindungsgemäßen Verdichteranordnung.

Bevorzugterweise findet ein Datenaustausch zwischen der Steuerung der Abdeckelemente, der Bremse des Fahrzeugs und der Druckregelung der Reifenkavität statt, wobei Druckregelung der Reifenkavität vorzugsweise über die in dieser Anmeldung beschriebene Verdichteranordnung realisiert ist.

Vorteilhafterweise schließen die Abdeckelemente automatisch bei stehendem Fahrzeug.

In einer vorteilhaften Ausführungsform sind die Abdeckelement selbstreinigend ausgebildet, beispielsweise über eine Reinigungseinrichtung die bei rotatorischer Bewegung der Abdeckelemente über die Oberfläche der Abdeckelemente entlang schabt.

Generell kann die Betätigung der Abdeckelemente automatisiert, d.h. bedarfsabhängig erfolgen oder über ein von einem Fahrer des Fahrzeugs vorgegebenes Steuersignal. Ein Vorteil der Fahrt mit geschlossenen Abdeckelementen ist, dass die Bremsanlage eines Fahrzeugs mit dem erfindungsgemäßen Fahrzeugrad weniger stark verschmutzt und auch Flüssigkeiten beispielsweise Regenwasser weniger stark ausgesetzt ist. Insbesondere reduziert sich die Riefenbildung auf den Bremsscheiben eines Fahrzeugs, das mit dem erfindungsgemäßen Fahrzeugrad ausgestattet ist.

Die Betätigungseinrichtung eines erfindungsgemäßen Fahrzeugrads kann zwei Arten von Aktuatoren aufweisen. Die Aktuatoren der ersten Art führen bei einer Druckmittelbeaufschlagung zu einer Öffnung der Abdeckelemente und die Aktuatoren der zweiten Art führen bei einer Druckmittelbeaufschlagung zu einer Schließung der Abdeckelemente.

Das derartige vorsehen von Aktuatoren verschiedener Arten kann mit sämtlichen in dieser Anmeldung beschriebenen Arten von Fahrzeugrädern kombiniert werden. Hierzu kann beispielsweise eine zentrale Schalteinheit verschiedene Druckmittelleitungen mit Druckmittel beaufschlagen je nachdem welche Art von Aktuatoren angesteuert bzw. mit Druckmittel beaufschlagt werden soll.

Weitere Merkmale, Anwendungsmöglichkeiten und Vorteile der Erfindung ergeben sich aus der nachfolgenden Beschreibung von Ausführungsbeispielen der Erfindung, die anhand der Zeichnung erläutert werden, wobei die Merkmale sowohl in Alleinstellung als auch in unterschiedlichen Kombinationen für die Erfindung wesentlich sein können, ohne dass hierauf nochmals explizit hingewiesen wird. Es zeigen:
Figur 1 eine schematische Darstellung eines Fahrzeugs mit vier erfindungsgemäßen Fahrzeugrädern;
Figur 2 eine Einbaulage einer Verdichteranordnungen im Detail;
Figur 3 eine alternative Einbaulage der Verdichteranordnungen im Detail;
Figuren 4 bis 10 ein erfindungsgemäßes Fahrzeugrad einer ersten Ausführungsform;
Figuren 11 bis 17 ein erfindungsgemäßes Fahrzeugrad einer weiteren Ausführungsform eine weitere Ausführungsform der Verdichteranordnung;
Figur 18 Bis 25 ein erfindungsgemäßes Fahrzeugrad einer weiteren Ausführungsform;
Figur 26 Bis 31 ein erfindungsgemäßes Fahrzeugrad einer weiteren Ausführungsform;
Figuren 32 bis 40 ein Fahrzeugrad nicht Teil der Erfindung
Figuren 41 bis 43 eine Verdichteranordnung mit radial beweglichem Verdichterbauteil;
Figur 44 eine alternative Verdichteranordnung mit radial beweglichem Verdichterbauteil;
Figuren 45 bis 48 eine Verdichteranordnung mit axial beweglichem Verdichterbauteil;
Figur 49 eine schematische Schaltung;
Figur 50 eine weitere schematische Schaltung;
Figur 51 eine Detaildarstellung einer Druckmittelführung; und
Figur 52 eine Detaildarstellung einer Druckmittelschaltung.

In den folgenden Figuren tragen sich entsprechende Bauteile und Elemente gleiche Bezugszeichen. Der besseren Übersichtlichkeit wegen sind nicht in allen Figuren sämtliche Bezugszeichen wiedergegeben.

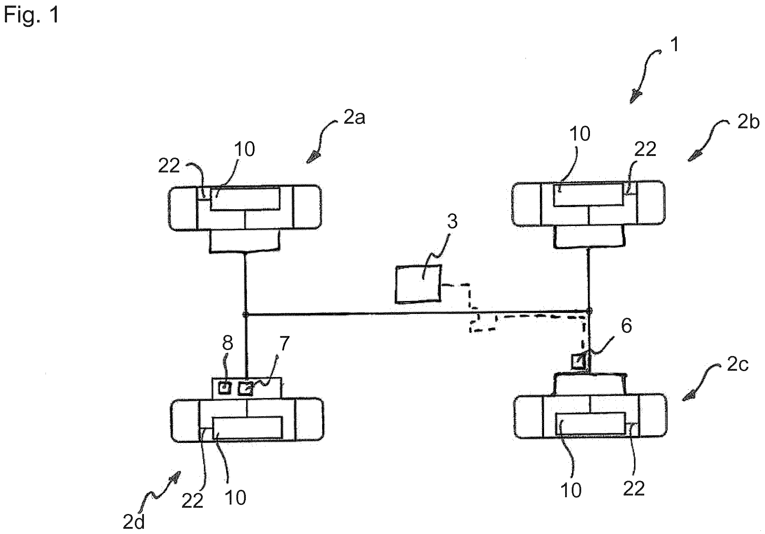

Figur 1 zeigt ein schematisch dargestelltes erfindungsgemäßes Fahrzeug 1. Das Fahrzeug weist vorliegend vier Fahrzeugräder 2, die mit 2a-2d gekennzeichnet sind, auf, wobei die vorliegende Erfindung nicht auf vierrädrige Fahrzeuge 1 beschränkt ist. Die Fahrzeugräder 2 werden nachfolgend noch näher im Detail beschrieben. Jedem der Fahrzeugräder 2 ist eine in Figur 1 schematisch dargestellte Verdichteranordnung 10 zugeordnet.

Bei einem ersten Fahrzeugrad 2a ist die Verdichteranordnung 10 als mechanisch angetriebene Verdichteranordnung 10 mit radial beweglichem Verdichterbauteil ausgeführt.

Bei einem weiteren Fahrzeugrad 2b ist die Verdichteranordnung 10 als mechanisch angetriebene Verdichteranordnung 10 mit axial beweglichem Verdichterbauteil ausgeführt

Bei einem weiteren Fahrzeugrad 2c ist die Verdichteranordnung 10 als elektrisch angetriebene Verdichteranordnung 10 ausgeführt. Die elektrische Energie zum Betrieb der Verdichteranordnung 10 wird von der Hauptbatterie 3 des Fahrzeugs über eine symbolisch dargestellte, vorzugsweise kontaktlose, vorzugsweise induktive, Übertragungseinrichtung 6 von der Radträgerseite zur Nabenseite übertragen. Die Übertragungseinrichtung 6 kann auch durch Schleifkontakte gebildet sein.

Bei einem weiteren Fahrzeugrad 2d wird elektrische Energie zum Betrieb der Verdichteranordnung 10 direkt nabenseitig über eine Energiequelle bereitgestellt. Die Energiequelle kann ein Energiespeicher 7, beispielsweise ein Akkumulator, oder ein Energieerzeuger 8, vorzugsweise ein Generator, sein. Der Energieerzeuger 8 nutzt zur Stromerzeugung die rotatorische Relativbewegung zwischen Radträgerseite und Nabenseite aus. Vorteilhaft ist auch die Kombination eines Energiespeichers 7 mit einem Energieerzeuger 8.

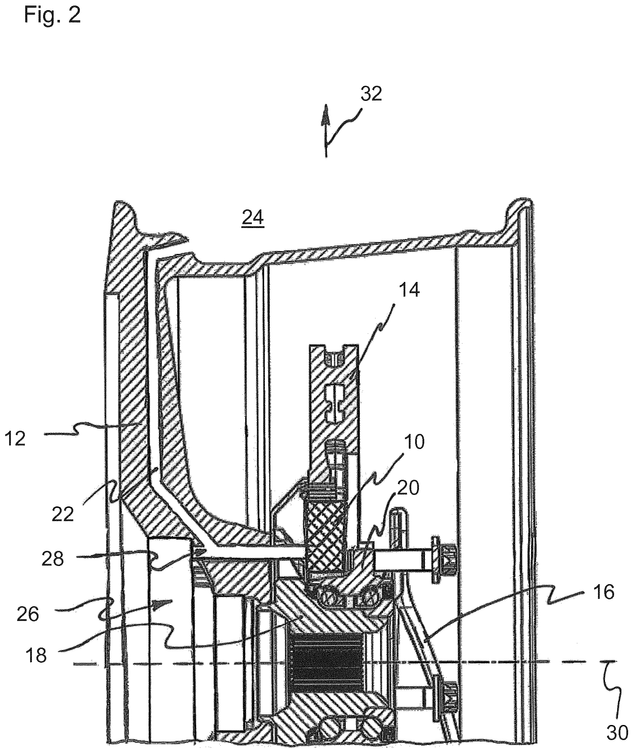

In Figur 2 ist die Einbaulage einer mechanisch angetriebenen Verdichteranordnung 10, wie in den oben erwähnten Rädern 2a und 2b angeordnet, schematisch dargestellt. Die Verdichteranordnung 10 selbst ist in Figur 2 nur schematisch durch eine kreuzschraffierte Fläche dargestellt.

Eine Felge trägt das Bezugszeichen 12. Eine Bremsscheibe 14, ein Radträger 16, eine Radnabe 18 und ein Radlager 20 sind ebenso dargestellt.

Von der Verdichteranordnung 10 erstreckt sich eine erste Druckmittelleitung 22 bis zu einer Reifenkavität 24. Der Reifen selbst ist in Figur 1 nicht dargestellt. In der in Figur 1 gezeigten Ausführungsform erstreckt sich die erste Druckmittelleitung 22 durch das Material der Felge 12.

Im Bereich einer Radnabenaufnahme 26 weist die Felge 12 einen schematisch dargestellten Anschluss 28 zum Zuführen eines Abdichtmittels auf. Der Anschluss 28 ist dabei optional.

Eine Rotationsachse trägt das Bezugszeichen 30 und eine radiale Richtung das Bezugszeichen 32. Um die Rotationsachse 30 dreht sich beim Betrieb des Fahrzeugs die Nabenseite und damit die nabenseitigen Komponenten gegenüber der Radträgerseite, also gegenüber den radträgerseitigen Komponenten, wie beispielsweise gegenüber dem Radträger oder auch gegenüber der Fahrgastzelle des Fahrzeugs.

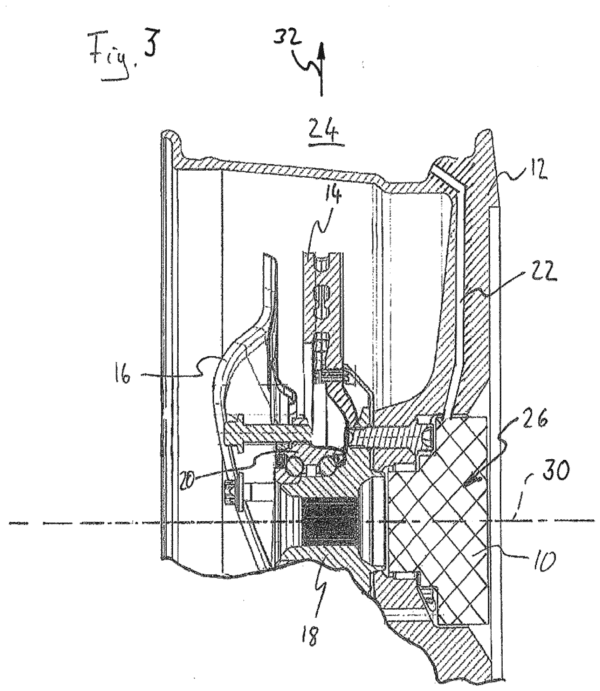

In Figur 3 ist die Einbaulage einer elektrisch angetriebenen Verdichteranordnung 10, wie in den oben erwähnten Rädern 2c und 2d angeordnet, in einer Darstellung ähnlich der Darstellung von Figur 2 gezeigt. Die elektrisch angetriebene Verdichteranordnung 10 ist im Bereich der Radnabenaufnahme 26, vorzugsweise in der Radnabenaufnahme 26, angeordnet.

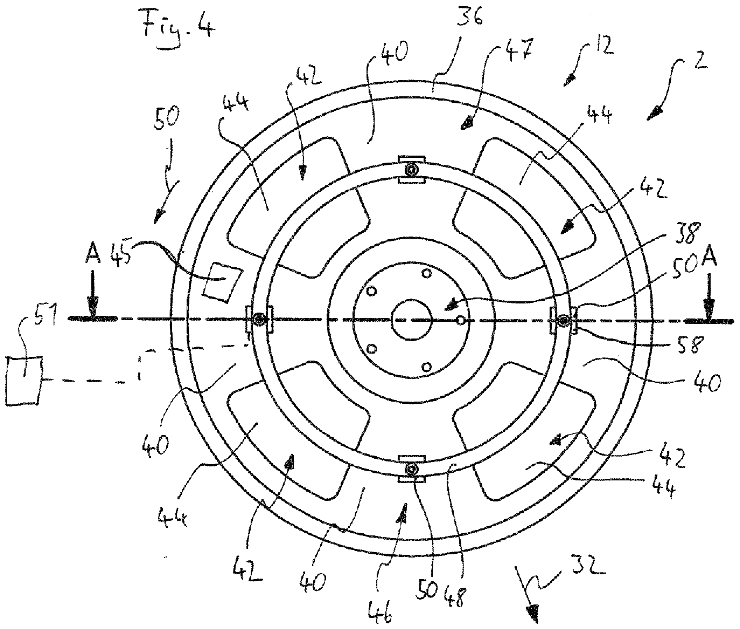

Figur 4 zeigt eine erste Ausführungsform eines erfindungsgemäßen Fahrzeugrades in einer Seitenansicht von Seiten des Radträgers aus gesehen im Detail. Die Felge 12 des Fahrzeugrades 2 ist dabei ohne den Reifen gezeigt. Die Felge 12 umfasst ein radial außen liegendes Felgenbett 36 und einen radial innen liegenden Nabenabschnitt 38.

Mehrere speichenartige Tragabschnitte 40 erstrecken sich in radialer Richtung. Die speichenartigen Tragabschnitte 40 erstrecken sich von dem Nabenabschnitt 38 zum Felgenbett 36.

Die Tragabschnitte 40 sind jeweils über Zwischenräume 42 zueinander beabstandet. Jedem Zwischenraum 42 ist ein Abdeckelement 44 zugeordnet.

In der Darstellung von Figur 1 sind die Abdeckelemente 44 in einer ersten Position gezeigt. Vorliegend ist das Fahrzeugrad derart ausgebildet, dass in dieser ersten Position die Abdeckelement 44 die Zwischenräume 42 derart bedecken, dass die Zwischenräume 42 komplett verschlossen sind. Diese komplette Bedeckung ist jedoch nicht zwingend.

Eine Staubsammelvorrichtung 45 ist symbolisch dargestellt im Innenraum der Felge 12 angeordnet. Die Staubsammelvorrichtung 45 kann magnetisch oder über einen Luftfilter Staub, der sich im Innenbereich 47 der Felge 12 in der Luft befindet, sammeln.

Die Felge umfasst eine Betätigungseinrichtung 46. die Betätigungseinrichtung 46 umfasst ein ringförmiges Betätigungselement 48.

Das ringförmige Betätigungselement 48 ist mit mehreren in einer Umfangsrichtung verteilt angeordneten Aktuatoren 50 verbunden, die ebenfalls einen Teil der Betätigungseinrichtung 46 bilden. Die Aktuatoren 50 sind über eine Kopplungseinrichtung 51 mit der Bremse des Fahrzeugs 1 koppelbar. Hierdurch kann die Betätigung der Aktuatoren 50 an den jeweiligen Fahrzustand des Fahrzeugs 1 oder auch an dem Betriebszustand der Bremse des Fahrzeugs 1 gekoppelt werden. Alternativ oder zusätzlich kann die Kopplungseinrichtung 51 mit einer Bedieneinheit für den Fahrer des Fahrzeugs 1 koppel- bzw. verbindbar sein.

Eine derartige Kopplungseinrichtung 51 ist mit jeder der in dieser Anmeldung beschriebenen Ausführungsformen des Fahrzeugrades 2 kombinierbar, sieht jedoch nicht zwingend. Die Aktuatoren 50 sind jeweils über Druckmittelleitungen 52 mit der Reifenkavität 24 verbunden.

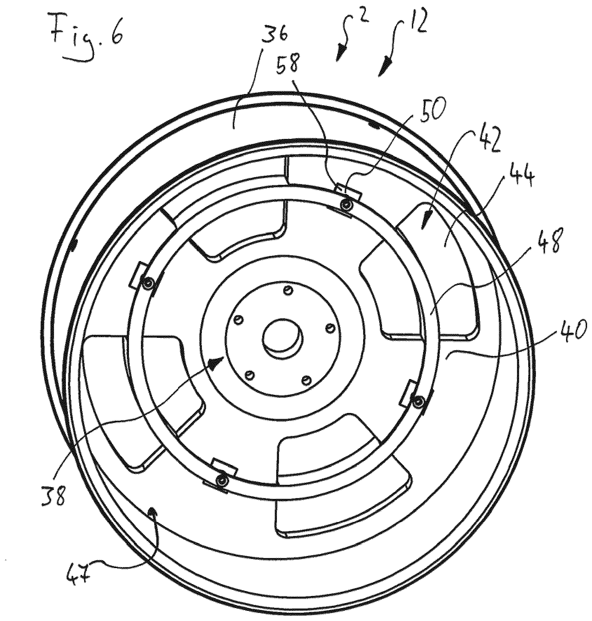

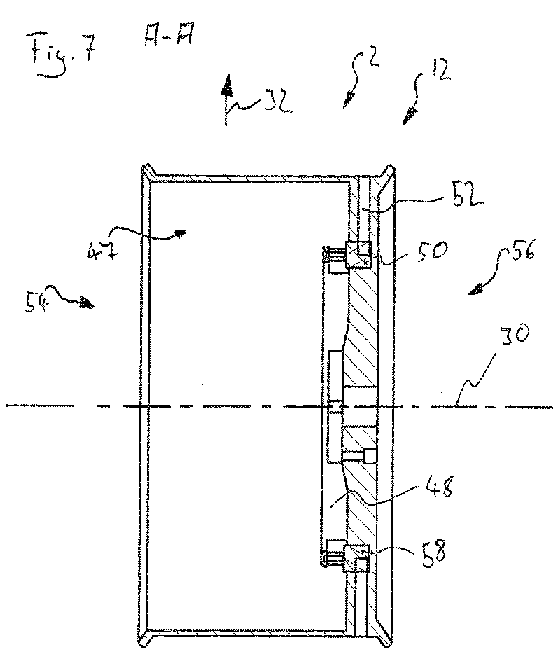

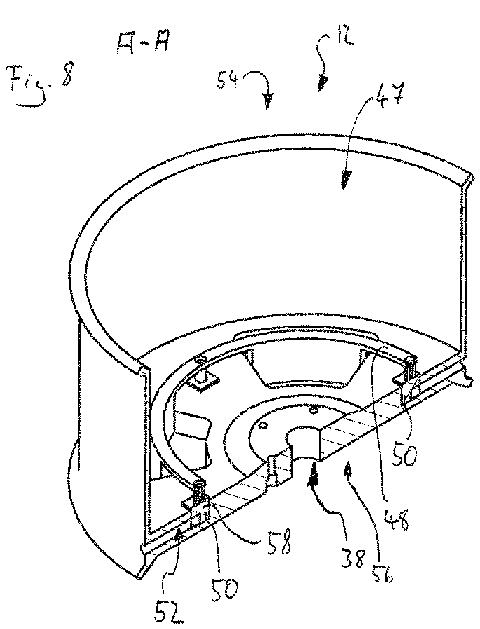

Die Figuren 4-8 zeigen die Abdeckelemente 44 jeweils in der ersten Position, in der sie bei dieser Ausführungsform die Zwischenräume 42 komplett verschließen. Die Figuren 7, 8 und 10 zeigen das Fahrzeugrad 2 jeweils entlang der Linie A-A aus Figur 4 geschnitten.

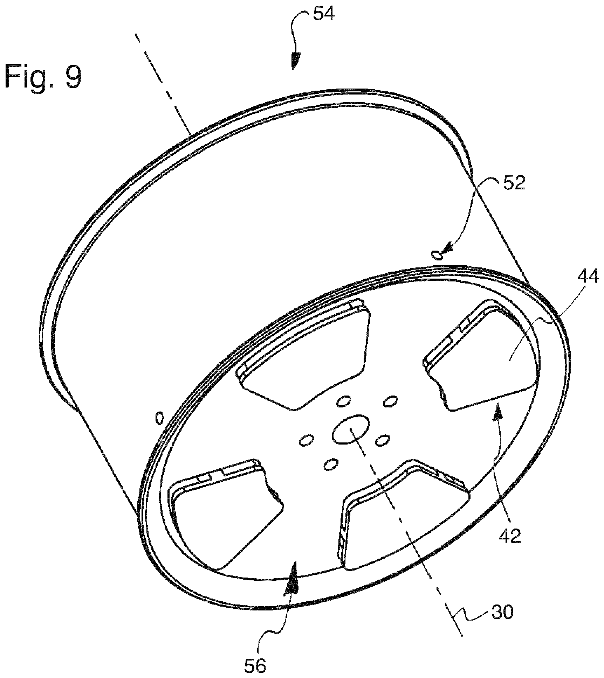

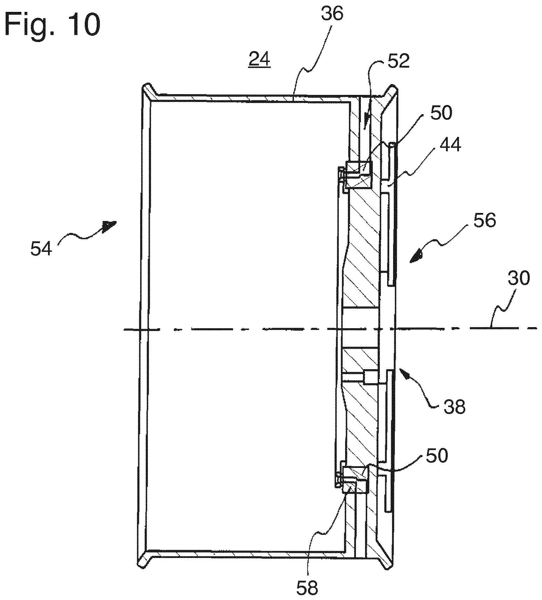

In den Figuren 9 und 10 ist das Fahrzeugrad 2 der Figuren 4-8 in einem Zustand gezeigt, in dem sich die Abdeckelemente 44 in einer zweiten Position befinden.

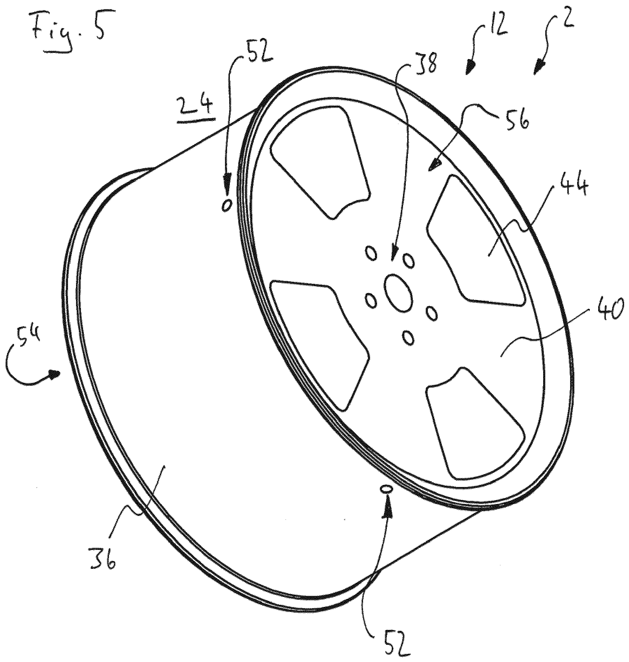

In dieser zweiten Position bedecken die Abdeckelemente 44 die Zwischenräume 42 weniger als in der ersten Position. Genauer gesagt sind die Abdeckelement bei der gezeigten Ausführungsform entlang der Rotationsachse 30 gesehen von einer Radträgerseite 54 des Fahrzeugrads 2 zu einer Außenseite 56 in verschoben. Figur 9 zeigt dabei eine perspektivische Darstellung ähnlich der Darstellung von Figur 5 und Figur 10 zeigt ein geschnittene Darstellung ähnlich der Darstellung von Figur 7.

Die eben beschriebene Verschiebung der Abdeckelemente 44 erfolgt über pneumatische Betätigung. Diese pneumatische Betätigung erfolgt über die Aktuatoren 50.

Die Aktuatoren 50 umfassen jeweils Schalteinheiten 58, mit denen über Druckmittelbeaufschlagung das ringförmige Betätigungselement 48 verschiebbar ist. Das unter Druck stehende Druckmittel stammt dabei aus der Reifenkavität 24.

Dabei sind die Schalteinheiten 58 derart ausgebildet, dass die Abdeckelemente 44 über das ringförmige Betätigungselement 48 von der ersten Position in die zweite Position und von der zweiten Position zurück in die erste Position über pneumatische Betätigung überführbar sind. Bei einem Umschalten der Richtung der Bewegung der Abdeckelemente 44 bei pneumatischer Betätigung über die Schalteinheiten 58 realisierbar ist.

Über die Schalteinheiten 58 wird auch die Betätigung der Aktuatoren und damit die pneumatische Betätigung der Abdeckelement 44 an sich gesteuert.

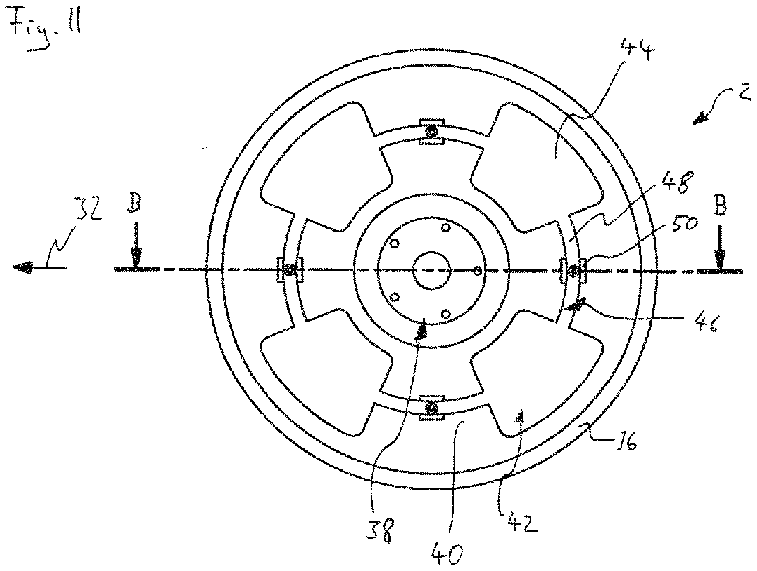

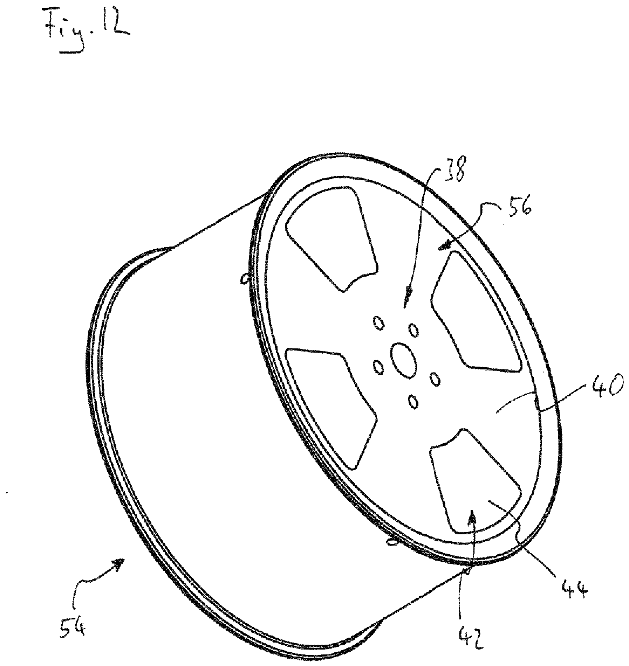

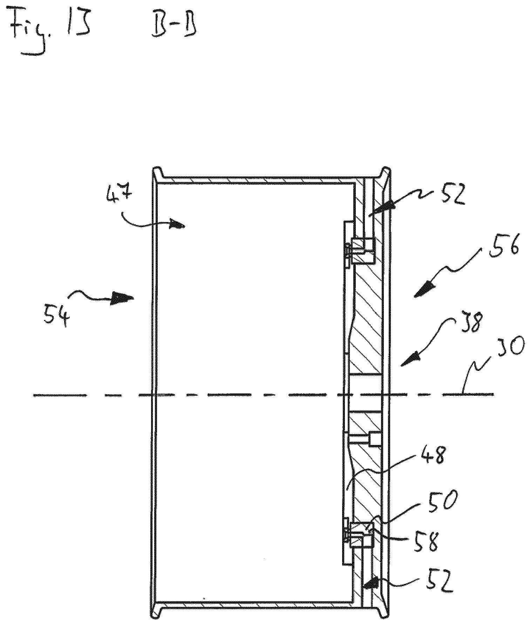

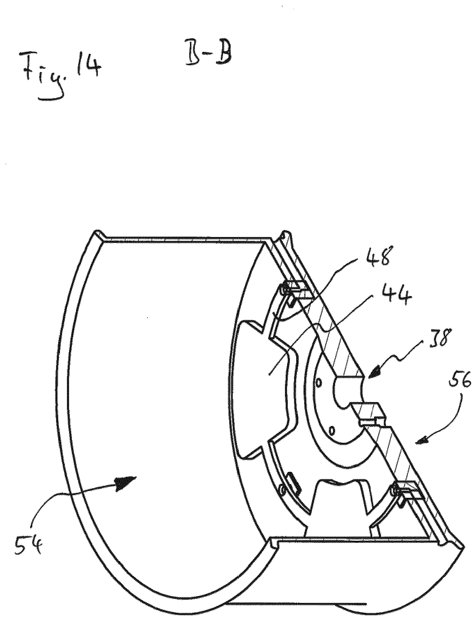

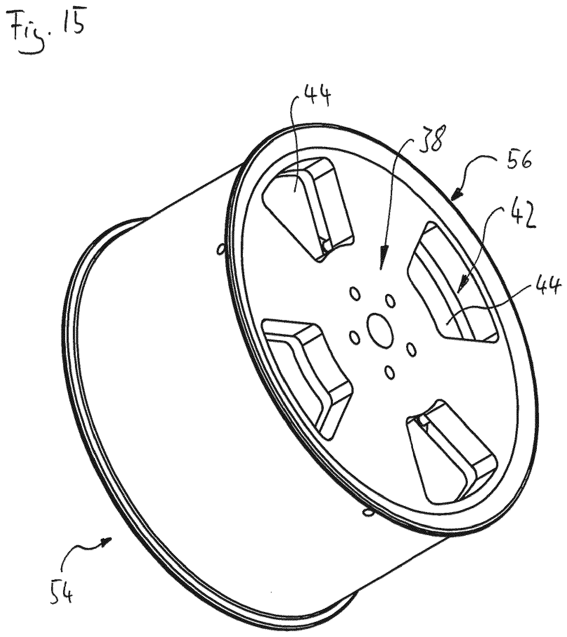

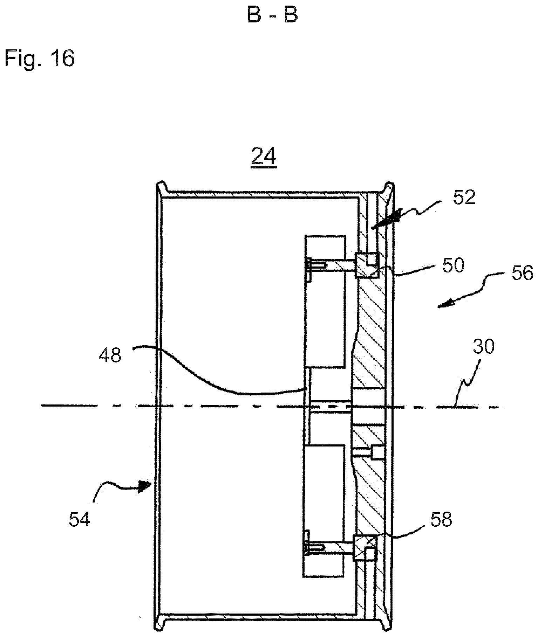

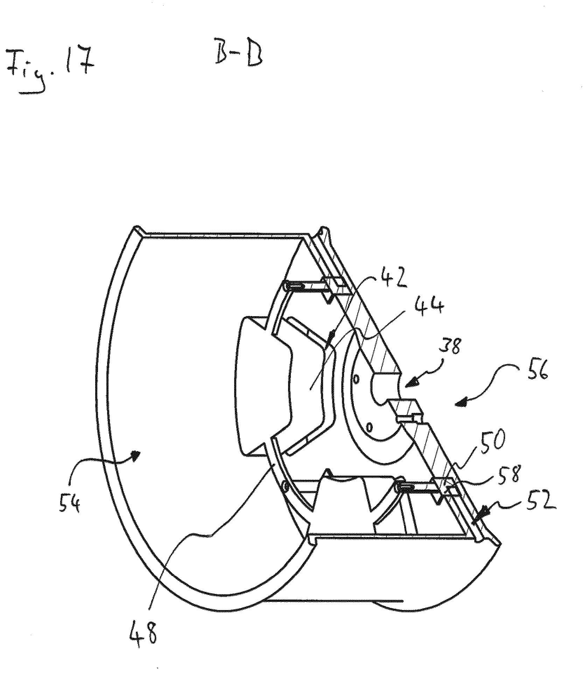

Die Schalteinheiten 58 können dazu mit der die Bremsscheibe 14 umfassenden Bremse gekoppelt sein und zwar derart, dass sie bei Betätigung der Bremse die Abdeckelement 44 in die zweite Position (Figuren 9 und 10) überführen. Denkbar ist auch, dass die Abdeckelement 44 dann in die zweite Position (Figuren 9 und 10) durch einen Schaltvorgang der Schalteinheiten 58 überführt werden, wenn eine Temperatur der Bremsscheibe 14 einen bestimmten Wert überschreitet. Die Figuren 11-17 zeigen eine alternative Ausführungsform des erfindungsgemäßen Fahrzeugrads 2. Die Figuren 11-14 zeigen dabei die Abdeckelemente 44 in der ersten Position. In dieser ersten Position sind die Zwischenräume 42 komplett durch die Abdeckelemente 44 verschlossen. In den Figuren 15-17 ist das Fahrzeugrad 2 dieser Ausführungsform mit den Abdeckelementen 44 in der zweiten Position gezeigt. In dieser zweiten Position sind die Abdeckelemente 44 in axialer Richtung, also in Richtung der Rotationsachse 30 zur Radträgerseite 54 des Fahrzeugrades 2 hin verschoben. Hierdurch sind die Zwischenräume 42 jeweils geöffnet.

Die in den Figuren 11-17 gezeigte Ausführungsform des Fahrzeugrades 2 unterscheidet sich damit also von der in den Figuren 4-10 gezeigten Ausführungsform dadurch, dass die Bewegung der Abdeckelemente 44 beim Öffnen, also beim Übergang von der ersten Position in die zweite Position, zwar ebenfalls entlang der Rotationsachse 30 jedoch in die entgegengesetzte Richtung erfolgt.

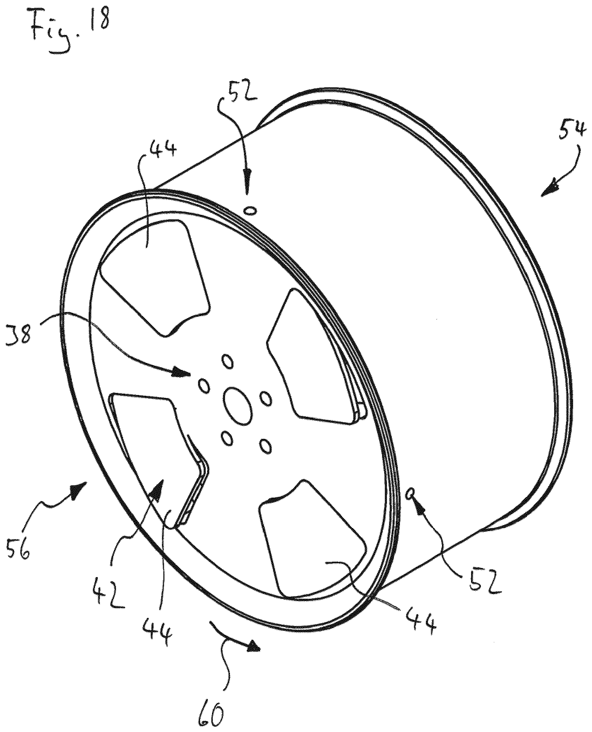

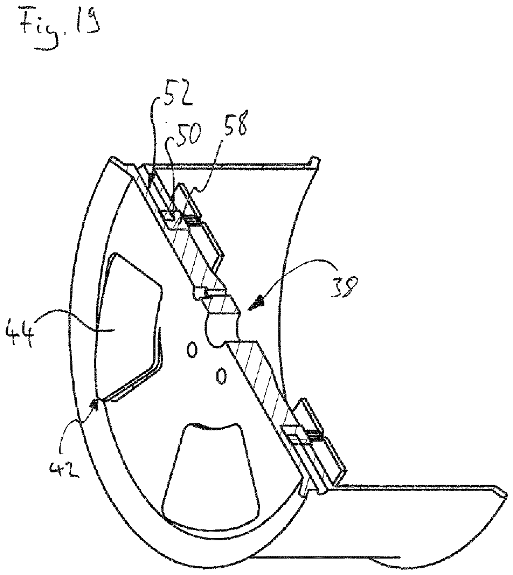

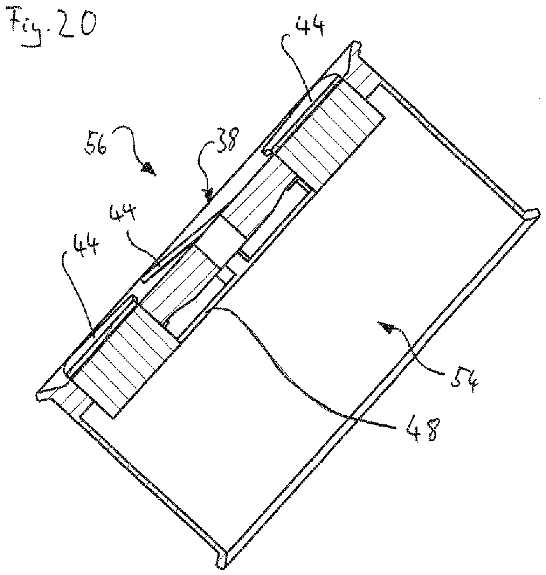

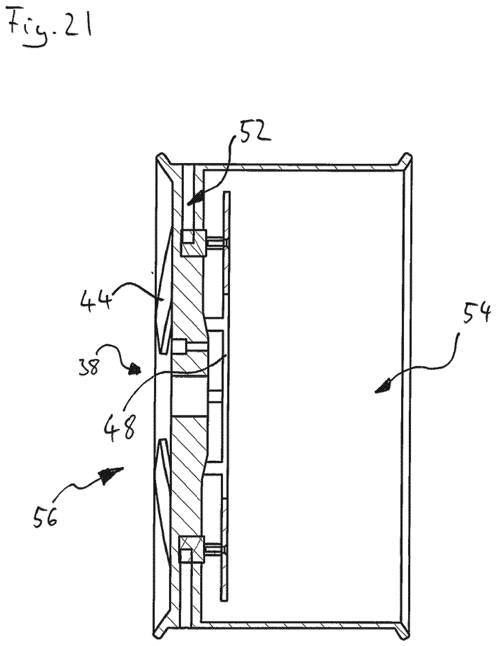

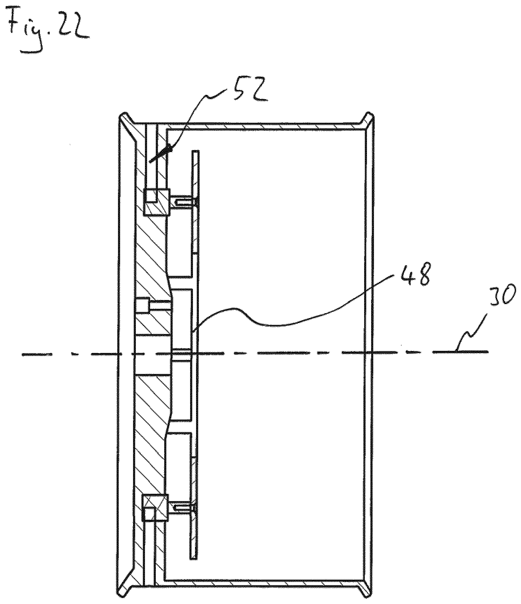

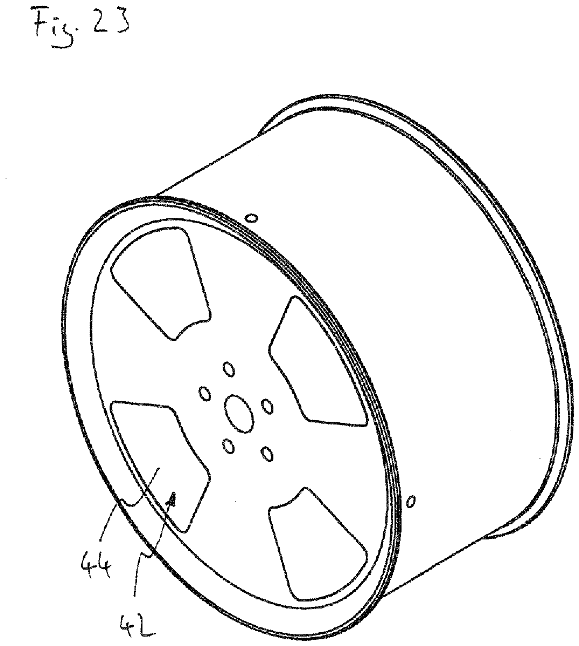

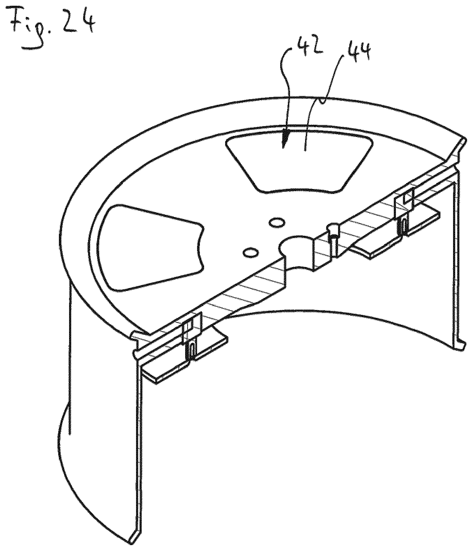

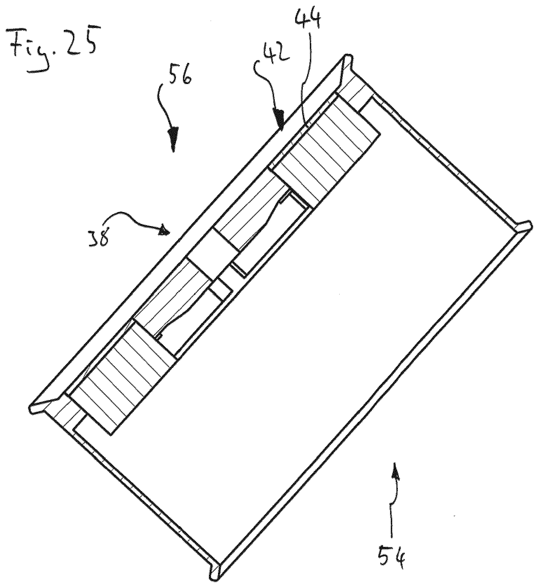

Die Figuren 18-25 zeigen ein Fahrzeugrad 2 einer weiteren Ausführungsform. In den Figuren 18-21 sind die Abdeckelemente 44 des Fahrzeugrades jeweils in der zweiten Position gezeigt. In den Figuren 22-25 sind die Abdeckelemente 44 jeweils in der ersten Position gezeigt. In der ersten Position verschließen die Abdeckelemente 44 bei der vorliegenden Ausführungsform die Zwischenräume 42 komplett.

In der zweiten Position sind die Abdeckelemente 44 gegenüber den Tragabschnitten 40 gekippt, wodurch die Zwischenräume 42 geöffnet sind. Die Abdeckelemente 44 sind dabei derart gekippt, dass bei Rotation des Fahrzeugrades 2 entlang der mit dem Bezugszeichen 60 angezeigten Rotationsrichtung Luft über die Abdeckelemente 44 zur Radträgerseite 54 des Fahrzeugrades 2 gelangt bzw. geführt wird.

Um von der Montagerichtung bzw. der Fahrtrichtung des Fahrzeugs unabhängig zu sein, öffnen bzw. Kippen die Abdeckelemente 44 in unterschiedlichen Richtungen, was beispielsweise in Figur 18 gut sichtbar dargestellt ist. Die sich jeweils diametral gegenüberliegend angeordneten Abdeckelemente 44 öffnen in Umfangsrichtung gesehen zur entgegengesetzten Richtung hin.

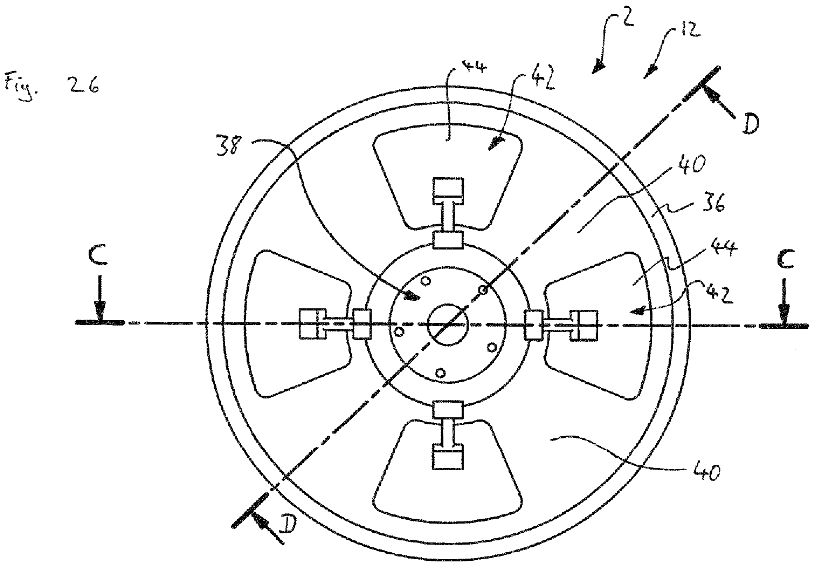

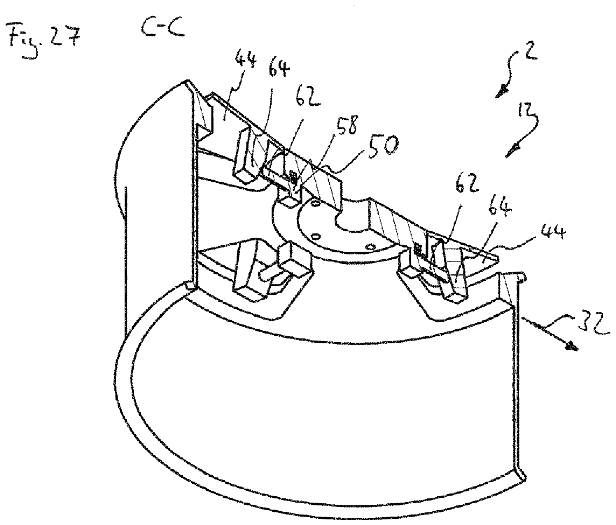

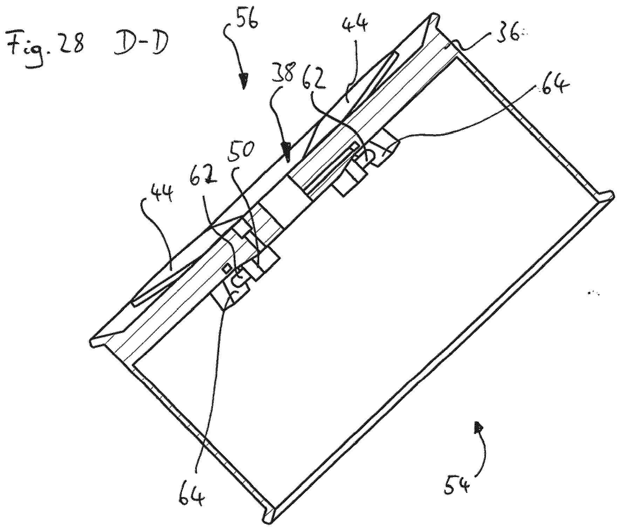

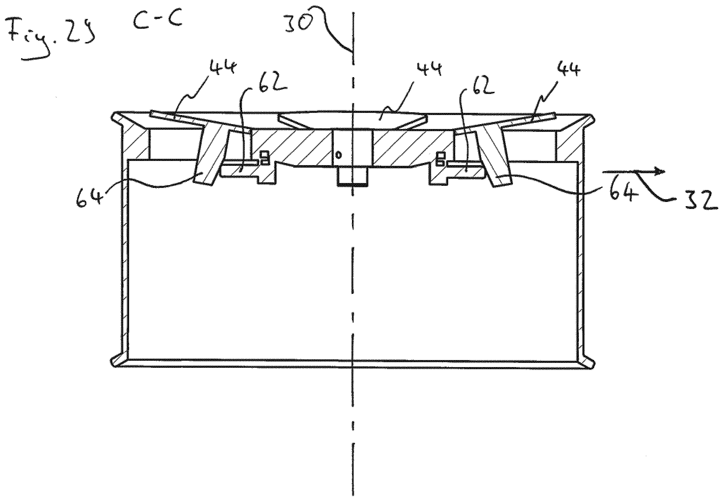

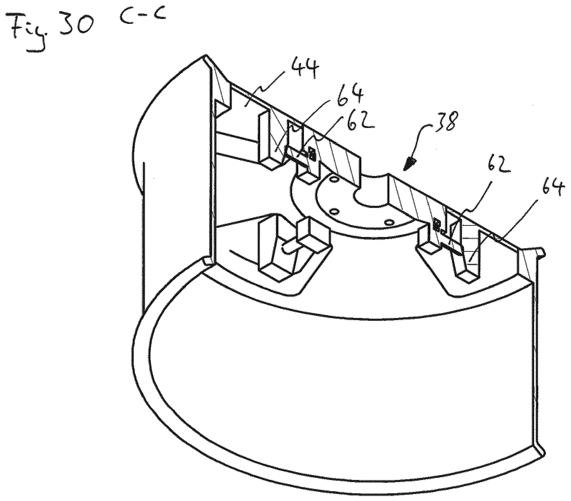

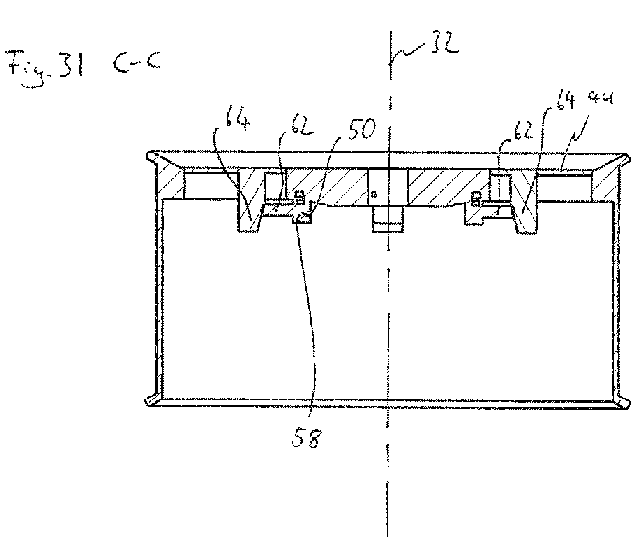

Die Figuren 26-31 zeigen ein Fahrzeugrad 2 einer weiteren Ausführungsform. In den Figuren 26-29 sind die Abdeckelemente 44 des Fahrzeugrades 2 jeweils in der zweiten Position gezeigt. In den Figuren 30-31 sind die Abdeckelemente 44 jeweils in der ersten Position gezeigt, in der sie die Zwischenräume 42 komplett verschließen.

In der zweiten Position sind die Abdeckelemente 44 gegenüber den Tragabschnitten 40 gekippt, wodurch die Zwischenräume 42 geöffnet sind. Die Abdeckelemente 44 sind dabei an ihrem radial innenliegenden Ende kippbar gelagert. Diese Art der kippbaren Lagerung ist jedoch nicht zwingend, in der Ausführungsform der Figuren 18-25 beispielsweise verläuft die Kippachse weitestgehend in radialer Richtung 32. Sind die Abdeckelement durch ein Verkippen von der ersten Position in die zweite Position überführbar, so kann die Kippachse also beispielsweise in radialer Richtung 32 verlaufen, radial außen am Abdeckelement 44 angeordnet sein oder radial innen am Abdeckelement 44 angeordnet sein.

Die Aktuatoren 50 können mit Stößeln 62, wie in den Figuren 26-31 gezeigt ausgebildet sein. Der Stößel 62 des jeweiligen Hubaktuators 50 kann dabei in radialer Richtung 32 aus- und einfahrbar sein, und mit seinem radial äußeren Ende an einem Anlageabschnitt 64 der Abdeckelemente 44 anliegen. Wird der jeweilige Stößel 62 eines Abdeckelements 44 bei einer derartigen Anordnung pneumatischen nach radial außen gefahren, also die Betätigungseinrichtung 46 pneumatisch betätigt, so liegt der Stößel 62 an dem jeweiligen abgeschrägten Anlageabschnitt 64 des Abdeckelements 44 an und kippt das Abdeckelement 44 durch seine nach radial außen gerichtete Bewegung ab.

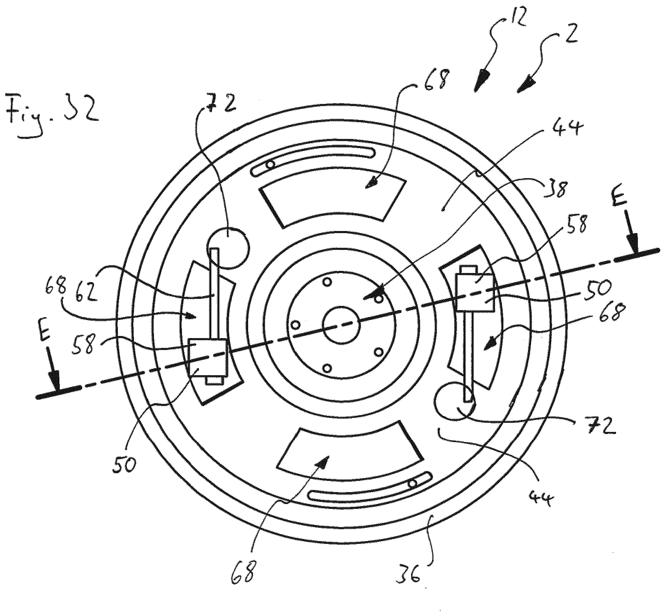

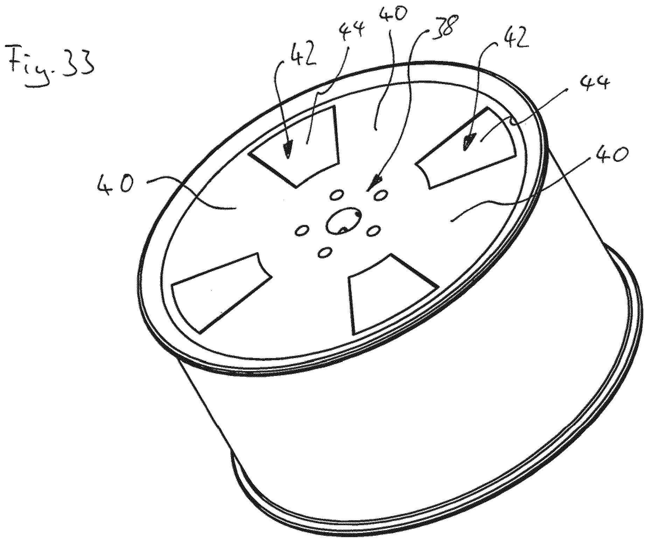

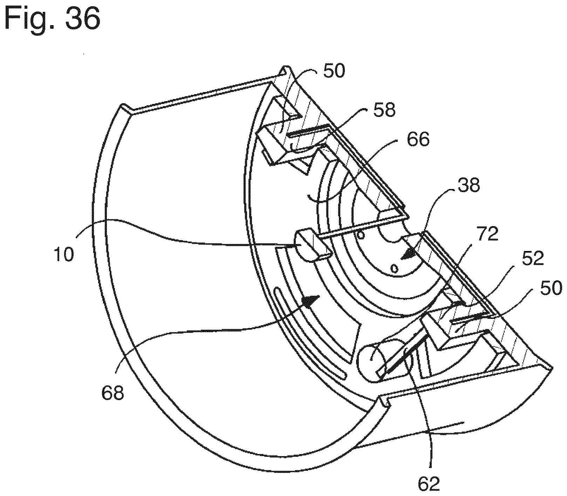

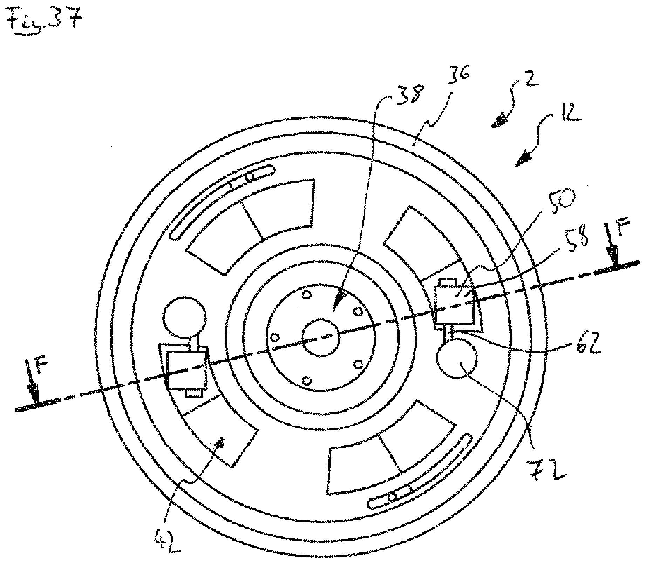

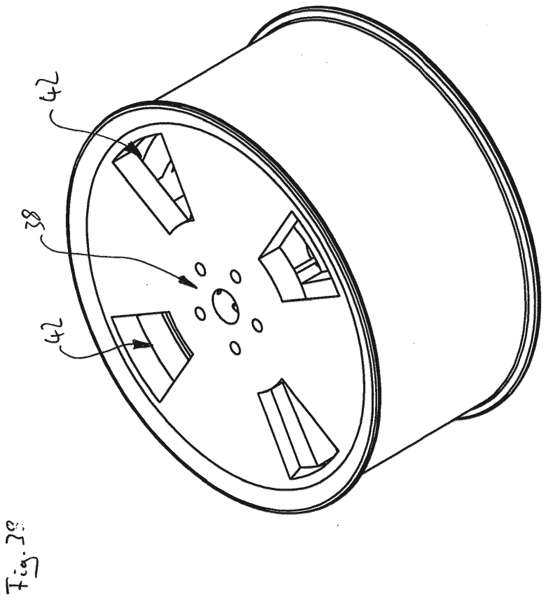

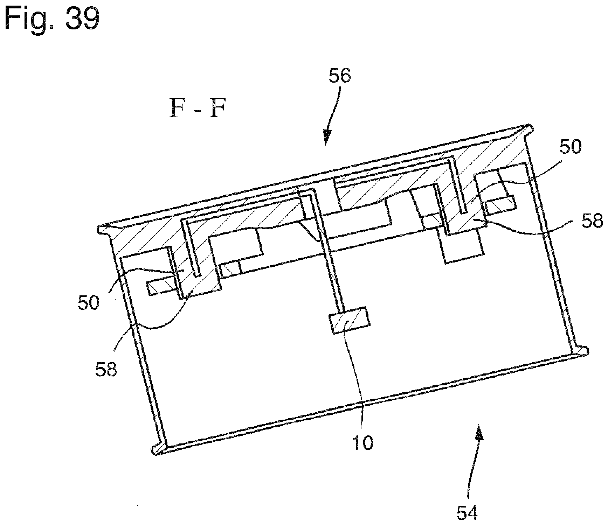

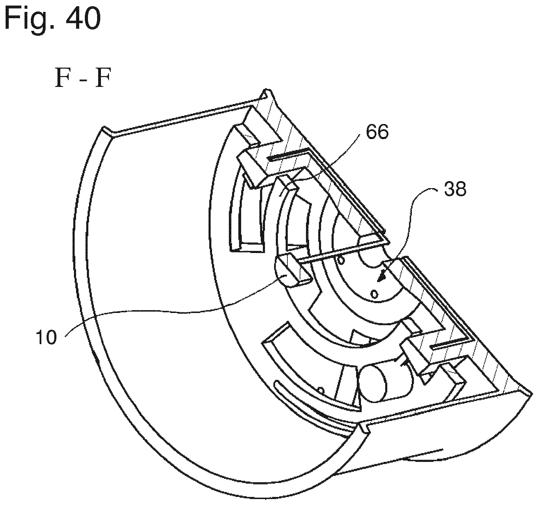

Die Figuren 32-40 zeigen ein nicht erfindungsgemäßes Beispiel Fahrzeugrad 2. In den Figuren 32, 33 und 34- 36 sind die Abdeckelemente 44 des Fahrzeugrades 2 jeweils in der ersten Position gezeigt, in der sie vorliegend die Zwischenräume 42 komplett verschließen. In den Figuren 37-40 sind die Abdeckelemente 44 jeweils in der zweiten Position gezeigt, in der sie die Zwischenräume 42 nicht komplett verschließen.

Die Abdeckelemente 44 der Ausführungsform der Figuren 32-40 sind durch eine rotatorische Bewegung gegenüber den Tragabschnitten 40 zwischen der ersten Position und der zweiten Position bzw. zwischen der zweiten Position und der ersten Position bewegbar.

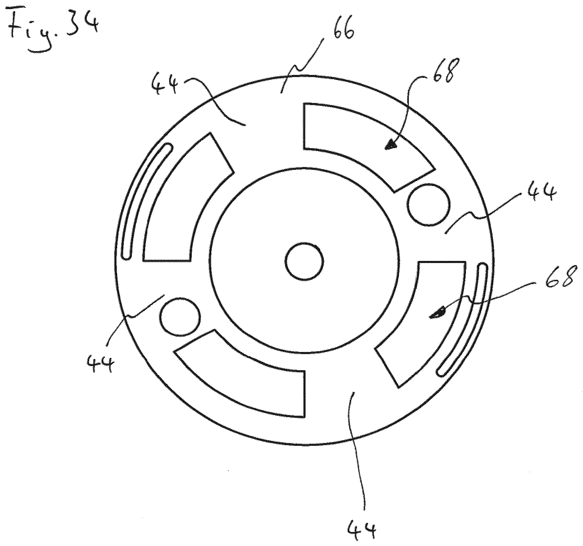

Die Abdeckelemente 44 können als ein scheibenartiges Element 66 ausgebildet sein. Ein solches scheibenartiges Element 66 ist in Figur 34 gezeigt. Das scheibenartige Element 66 weist schlitzartige Ausnehmungen 68 auf. Die schlitzartigen Ausnehmungen 68 dienen dazu, die rotatorische Bewegung des scheibenartigen Elements 66 bzw. der Abdeckelemente 44 gegenüber den Aktuatoren 50, die ortsfest mit der Felge 12 verbunden sind, zu ermöglichen. Die Aktuatoren 50 sind über die Stößel 62 mit Anlenkeinrichtungen 72, die mit dem scheibenartigen Element 66 ortsfest verbunden sind, verbunden.

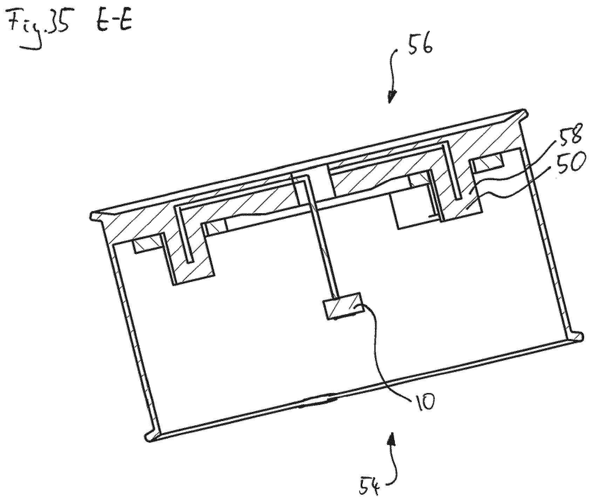

Die Aktuatoren 50 können mit einer Verdichteranordnung 10 verbunden sein. Eine derartige Verbindung zwischen den Aktuatoren 50 und einer Verdichteranordnung ist in den Figuren 35, 36, 39 und 40 symbolisch dargestellt. Über die Verdichteranordnung 10 sind die Aktuatoren mit Druckmittel beaufschlagbar. Hierdurch können die Abdeckelemente 44 pneumatisch betätigt werden.

Die Verdichteranordnung ist dabei vorzugsweise nabenseitig angeordnet. Es ist jedoch auch denkbar, die Aktuatoren 50 über entsprechende Druckmittelleitungen mit Drehdurchführungen mit einer fahrzeugseitigen Kompressoreinrichtung zur Druckmittelversorgung zu verbinden.

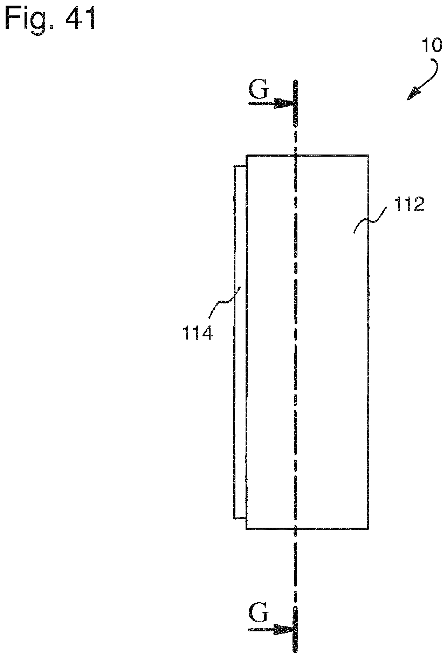

In den Figuren 41 bis 43 ist eine erste Ausführungsform einer mechanischen Verdichteranordnung 10 im Detail gezeigt. Die Verdichteranordnung 10 umfasst ein erstes Gehäuseteil 112 sowie ein zweites Gehäuseteil 114.

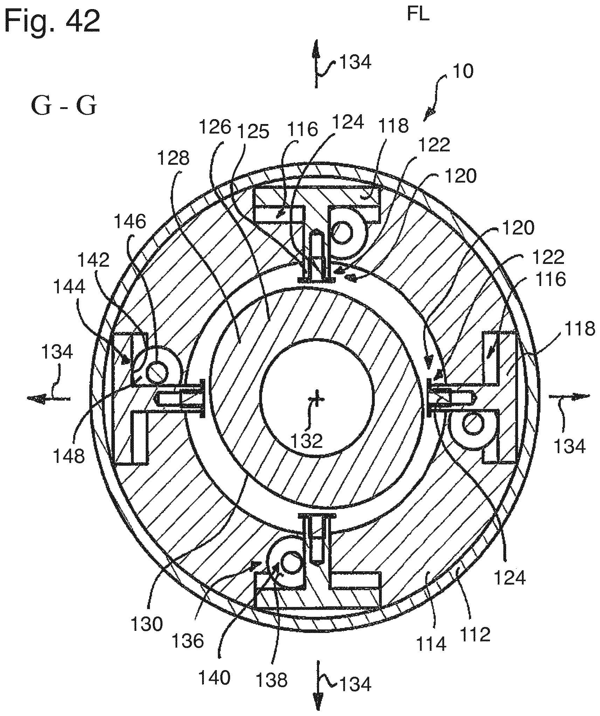

In Figur 42 ist die Verdichteranordnung 10 aus Figur 41 entlang der Linie G-G geschnitten dargestellt. Die Verdichteranordnung 10 umfasst vorliegend insgesamt vier nabenseitige Kompressionsräume 116, von denen lediglich zwei ein Bezugszeichen tragen.

Jedem der Kompressionsräume 116 ist ein nabenseitiges Verdichterbauteil 118 zugeordnet, von denen ebenfalls jeweils nur zwei ein Bezugszeichen tragen. Die Verdichteranordnung 10 umfasst mehrere Getriebe 120, wobei jedem der Kompressionsräume 116 ein Getriebe 120 zugeordnet ist. Die Getriebe 120 sind vorliegend jeweils als Kurvengetriebe 122 ausgeführt.

Die Getriebe 120 weisen jeweils ein nabenseitiges Getriebeteil 124 auf. Die nabenseitigen Getriebeteile 124 sind jeweils durch Stößelabtriebe 125 gebildet. Die Verdichterbauteile 118 sind dabei einstückig mit den Stößelabtrieben 125 bzw. nabenseitigen Getriebeteilen 124 ausgebildet. Die nabenseitigen Getriebeteile 124 der Getriebe 120 können jeweils mit einem radträgerseitigen Getriebeteil 126 der Verdichteranordnung 10 zusammenwirken.

Wie aus Figur 42 ersichtlich, weist die Verdichteranordnung 10 lediglich ein einziges radträgerseitiges Getriebeteil 126 auf, das mit jedem der nabenseitigen Getriebeteile 124 zusammenwirken kann. Das radträgerseitige Getriebeteil 126 ist als Scheibenkurve 128 mit einer äußeren Kurvenkontur 130 ausgebildet.

In Figur 42 ist die Verdichteranordnung 10 in einer Freilaufbetriebslage FL gezeigt. In der Freilaufbetriebslage FL wirken die nabenseitigen Getriebeteile 124 nicht mit dem radträgerseitigen Getriebeteil 126 zusammen.

Die nabenseitigen Getriebeteile 124 befinden sich in der Freilaufbetriebslage FL vorteilhafterweise, wie in Figur 42 gezeigt, in einer Position, in der sie unabhängig von der Ausrichtung des radträgerseitigen Getriebeteils 126 dieses nicht kontaktieren können. Dies wird über Kupplungseinrichtungen 136 erreicht, die jedem der nabenseitigen Getriebeteile 124 zugeordnet ist. Die Kupplungseinrichtungen 136 umfassen jeweils ein Kupplungselement 138. In der in Figur 2 gezeigten Freilaufbetriebslage befinden sich Kupplungselemente 138 jeweils in einer Sperrstellung 140. In dieser Sperrstellung 140 des Kupplungselements 138 sind die nabenseitigen Getriebeteile 124 jeweils an dem Zusammenwirken und vorliegend auch an dem Kontakt mit dem radträgerseitigen Getriebeteil 126 gehindert.

In der Sperrstellung 140 liegt ein Sperrabschnitt 142 der jeweiligen Kupplungselemente 138 jeweils an einem Anschlagsabschnitt 144 der jeweiligen nabenseitigen Getriebeteile 124 an. Der Anschlagsabschnitt 144 ist dabei vorliegend an dem einstückig mit dem nabenseitigen Getriebeteil 124 ausgebildeten Verdichterbauteil 118 ausgebildet.

Die Kupplungselemente 138 sind vorliegend stiftartig ausgebildet und umfassen neben dem Sperrabschnitt 142 auch jeweils einen Freigabeabschnitt 146 sowie einen Übergangsabschnitt 148.

Der Sperrabschnitt 142 ist dabei zylindrisch mit einem ersten Durchmesser ausgebildet und der Freigabeabschnitt 146 zylindrisch mit einem zweiten Durchmesser. Der Übergangsabschnitt 148 vom Sperrabschnitt 142 zum Freigabeabschnitt 146 weist eine Kegelstumpfform auf.

Der Freigabeabschnitt 146 ist in Richtung der radialen Richtung 134 versetzt zum Sperrabschnitt 142 angeordnet. Bewegt sich eines der Kupplungselemente 138 von der Freigabestellung in die Sperrstellung 140, so drängt es das ihm zugeordnete nabenseitige Getriebeteil 124 in die Position, in der es mit dem radträgerseitigen Getriebeteil 126 nicht in Kontakt treten kann.

Die Kupplungselemente 138 sind jeweils über Federn 149 in die Sperrstellung vorgespannt. Über einen Druckmittelkanal 156 sind die Kupplungselemente 138 jeweils durch Beaufschlagung mit Druckmittel in Freigabestellung überführbar.

Sobald die Beaufschlagung mit Druckmittel über den Druckmittelkanal 156 unterbrochen ist, bewegen sich die Kupplungselemente 138 zurück in die Sperrstellung, da sie Federvorgespannt sind.

Die nabenseitigen Getriebeteile 124 bzw. die Verdichterbauteile 118 werden dabei nach radial außen gedrängt und zwar in eine Stellung, in der sie von dem radial innenliegenden radträgerseitigen Getriebeteil 126 abheben. Die Verdichteranordnung 10 befindet sich dann in der Freilaufstellung FL. Durch den konisch verlaufenden Übergangsabschnitt 148 wird dieses Drängen des nabenseitigen Getriebeteils 124 nach radial außen ermöglicht und der Übergang von Freigabestellung zu Sperrstellung erfolgt ruckfrei und graduell.

Da die nabenseitigen Getriebeteile 124, vorliegend über Federn, ebenfalls vorgespannt sind, müssen die Federn 149 zur Vorspannung der Kupplungselemente 138 stärker als die Federn zur Vorspannung der nabenseitigen Getriebeteile 124 ausgeführt sein. Diese Vorspannung im Zusammenspiel mit dem konischen Übergangsabschnitt 148 ermöglicht das Drängen der nabenseitigen Getriebeteile 124 in die abgehobene Position (Figur 42).

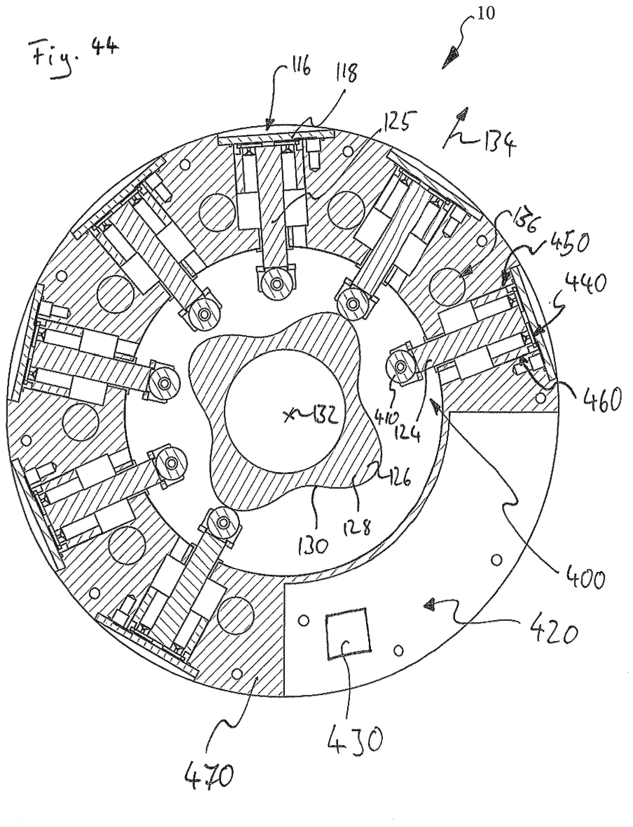

Figur 44 zeigt eine weitere Ausführungsform einer mechanischen Verdichteranordnung 10 ähnlich der Ausführungsform der Figuren 41 bis 43 sind die Verdichterbauteile 118 zur Ausführung einer oszillierenden translatorischen Bewegung in radialer Richtung ausgebildet.

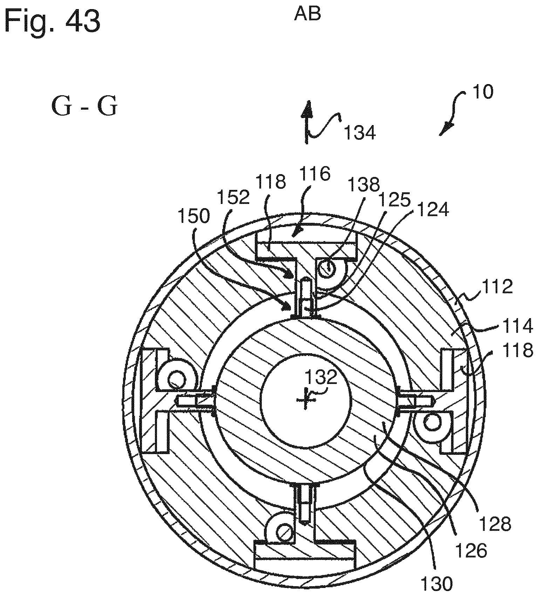

Die Darstellung eine Schnittdarstellung ähnlich der Figuren 42 und 43.

Die nabenseitigen Getriebeteile 124 sind dabei als Rollenstößel 400 ausgebildet. An ihrem dem radträgerseitigen Getriebeteil 126 zugewandten Ende weisen sie jeweils eine selbstschmierende Rolle 410 auf.

An den Verdichterbauteilen 18 sind jeweils Flatterventile 440 angeordnet. An den Verdichterbauteilen 118 sind auch Doppeldichtungen 450 angeordnet ist, die je ein Schmiermittelreservoir 460 des Verdichterbauteils 118 begrenzen und gleichzeitig den Kompressionsraum 116 gegen das Verdichterbauteil 118 dichten.

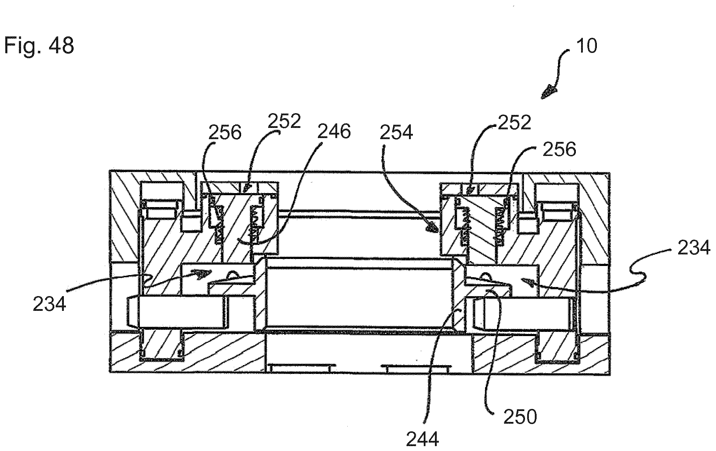

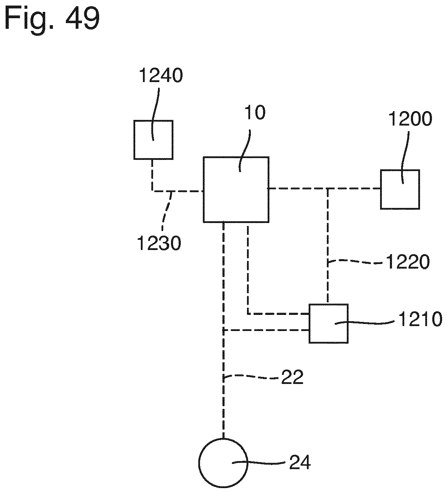

Die Verdichteranordnung 10 umfasst auch einen Bereich 420, der dazu dient, beispielsweise eine Kontrolleinrichtung, einen Filter, ein Kupplungsventil oder ein Entlastungsventil aufzunehmen. Auf die eben genannten Komponenten soll später im Zusammenhang mit Figur 48 und 49 noch weiter im Detail eingegangen werden. Zusätzlich kann dort eine Energiequelle 430 angeordnet sein, die beispielsweise als Akkumulator oder auch als Druckspeicher ausgeführt sein kann.

Ein nabenseitiger Teil 470 der Verdichteranordnung 10 ist weitestgehend ringförmig ausgebildet und umfasst vorliegend sämtliche in Figur 44 gezeigten Teile der Verdichteranordnung 10 außer dem radträgerseitigen Getriebeteil 126.

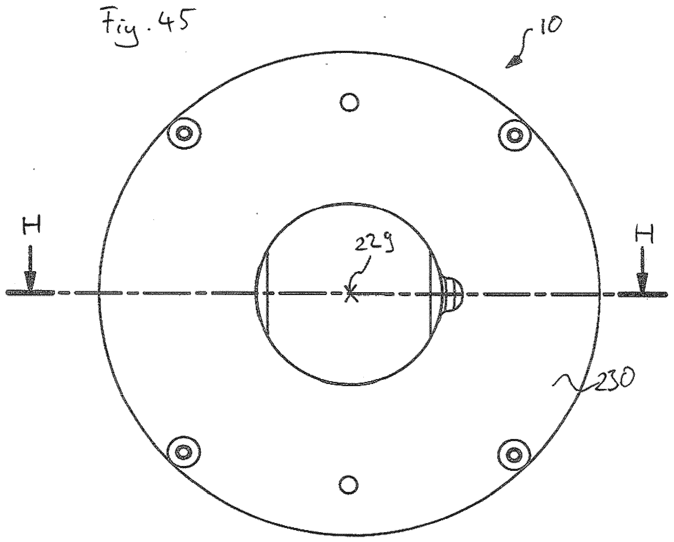

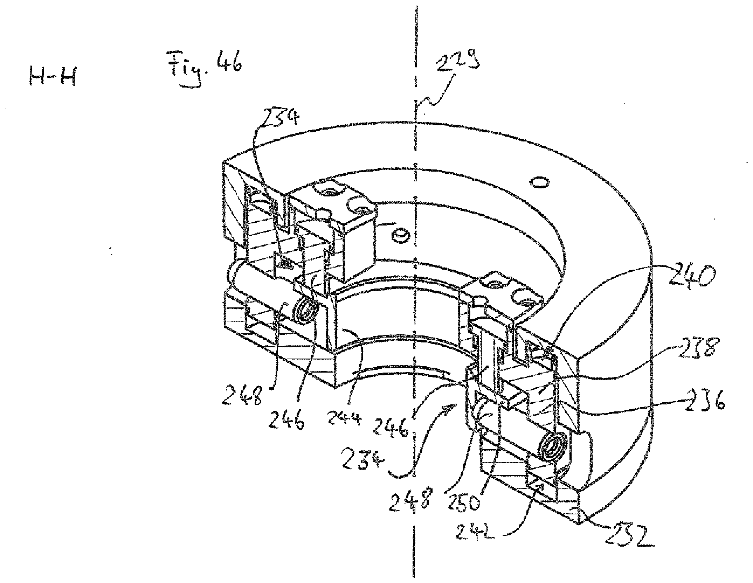

Figuren 45 bis 47 zeigen eine weitere Möglichkeit zur Ausführung der mechanischen Verdichteranordnung 10. In Figur 46 ist die Verdichteranordnung 10 entlang der Linie H-H geschnitten dargestellt.

Die Verdichteranordnung umfasst ein erstes nabenseitiges Gehäuseteil 230 sowie ein zweites nabenseitiges Gehäuseteil 232.

Nabenseitige Getriebeteile tragen das Bezugszeichen 234. In Figur 3 sind zwei der nabenseitigen Getriebeteile 234 der Verdichteranordnung 10 erkennbar.

Mit den nabenseitigen Getriebeteilen 234 ist ein Ringkolben 236 verbunden, der ein Verdichterbauteil 238 darstellt. Das Verdichterbauteil 238 in Form des Ringkolbens 236 begrenzt einen ersten Kompressionsraum 240 sowie einen zweiten Kompressionsraum 242.

Die nabenseitigen Getriebeelemente 234 stehen, in der in Figur 3 und 4 gezeigten Arbeitsbetriebslage, mit einem radträgerseitigen Getriebeteil 244 derart in Eingriff, dass sie mit diesen zusammenwirken können. Die nabenseitigen Getriebeelemente 234 bilden gemeinsam mit dem radträgerseitigen Getriebeteil 244 ein Kurvengetriebe 245, wobei das nabenseitige Getriebeelement 234 einen Stößelabtrieb bildet.

Die nabenseitigen Getriebeteile 234 weisen jeweils ein erstes aktuierbares Kontaktelement 246 und ein zweites feststehendes Kontaktelement 248 auf.

Die Kontaktelemente 246, 248 der jeweiligen nabenseitigen Getriebeteile 234 stehen mit einer Wulstzylinderkurve 250 des radträgerseitigen Getriebeteils 244 in Kontakt, wodurch das nabenseitige Getriebeteil 234 mit dem radträgerseitigen Getriebeteil 244 zusammenwirkt.

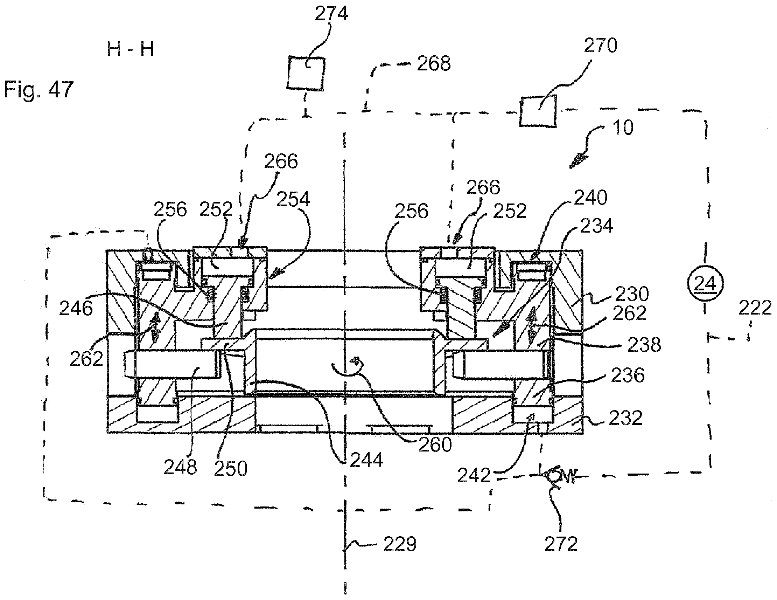

Wie bereits oben erwähnt sind die ersten Kontaktelemente 246 aktuierbar. Dies ist deutlich in Figur 47 ersichtlich. Die ersten Kontaktelemente stellen zusammen mit einem ihnen jeweils zugeordneten Druckraum 252 eine Kupplungseinrichtung 254 dar.

Durch Betätigung der Kupplungseinrichtung 254 können die nabenseitigen Getriebeteile 234 in Zusammenwirkung mit dem radträgerseitigen Getriebeteil 244 gebracht werden. Bei Unterbrechung der Betätigung der Kupplungseinrichtung 254 kann eine Zusammenwirkung der nabenseitigen Getriebeteile 234 mit dem radträgerseitigen Getriebeteil 244 verhindert werden.

In Figur 46 und 47 ist die Kupplungseinrichtung 254 jeweils im betätigten bzw. eingekuppelten Zustand gezeigt. Die Verdichteranordnung 10 befindet sich damit in einer Arbeitsbetriebslage.

In Figur 48 ist die Kupplungseinrichtung 254 in einem nicht betätigten bzw. ausgekuppelten Zustand gezeigt. Die Verdichteranordnung 10 befindet sich damit in einer Freilaufbetriebslage.

In dieser Freilaufbetriebslage kontaktieren die ersten aktuierbaren Kontaktelemente 246 die Zylinderwulstkurve 250 des radträgerseitigen Getriebeteils 244 nicht. Die nabenseitigen Getriebeteile 234 sind damit an einem Zusammenwirken mit dem radträgerseitigen Getriebeteil 244 gehindert.

Um die Verdichteranordnung 10 von der in Figur 48 gezeigten Freilaufbetriebslage in die Arbeitsbetriebslage zu überführen werden die Druckräume 252 mit Druckmittel beaufschlagt.

Die ersten, aktuierbaren Kontaktelemente 246 sind Kolbenartig ausgebildet und bewegen sich durch die Beaufschlagung mit Druckmittel in Richtung der Wulstzylinderscheibe 250 und kontaktieren diese. Dieser Zustand ist in Figur 46 und 47 dargestellt.

Die ersten, aktuierbaren Kontaktelemente 246 sind über Druckfedern 256 derart vorgespannt, dass sie die Verdichteranordnung 10 in eine Freilaufbetriebslage überführen, wenn die Druckräume 252 nicht mit Druckmittel beaufschlagt sind. Die Kupplungseinrichtung 254 ist also in eine nicht betätigte Stellung vorgespannt.

Bei fahrendem Fahrzeug findet eine rotatorische Relativbewegung des radträgerseitigen Getriebeteils 244 gegenüber dem nabenseitigen Getriebeteil 234 um die Rotationsachse 229 herum statt.

Dies ist durch den gekrümmten Pfeil mit dem Bezugszeichen 260 in Figur 47 illustriert.

In der Arbeitsbetriebslage der Verdichteranordnung 10 wird durch das Zusammenwirken des radträgerseitigen Getriebeteils 244 mit den nabenträgerseitigen Getriebeteilen 234 der Ringkolben 236 bzw. das durch ihn gebildete Verdichterbauteil 238 entlang der Rotationsachse 229 auf- und abbewegt, was durch die Doppelpfeile mit dem Bezugszeichen 262 angedeutet ist. Durch die oszillierende translatorische Bewegung des Ringkolbens 236 wird jeweils bei einer Auf- und Ab-Bewegung Druckmittel aus den ringförmigen Kompressionsräumen 240 und 242 gefördert.

Anhand Figur 49 wird die Ansteuerung der Verdichteranordnung 10 schematisch erläutert.

Die Einlässe 266 der Druckräume 252 sind jeweils über einen Abschnitt 268 einer Druckmittelleitung 222 über ein Ventil 270, das ein Kupplungsventil bildet mit der Reifenkavität 24 verbunden. Das Kupplungsventil 270 ist derart ausgestaltet, dass es öffnet, wenn der Druck im Reifen unter einen Druckschwellenwert fällt.

Die Druckräume 252 werden dann mit Druckmittel aus der Reifenkavität 24 beaufschlagt. Die ersten aktuierbaren Kontaktelemente 246 werden dann gegen die Vorspannung der Federn 256 in Richtung der Zylinderwulstkurve 250 bewegt und kontaktieren diese.

Durch die rotatorische Relativbewegung zwischen den radträgerseitigen Getriebeteil 244 und dem nabenseitigen Getriebeteil 234 und die Zusammenwirkung der beiden Getriebeteile wird also die oszillatorische Translationsbewegung des Verdichterbauteils 238 bzw. des Ringkolbens 236 erzeugt. Die oszillatorische Translationsbewegung des Verdichterbauteils 238 verringert jeweils alternierend die Volumina der Kompressionsräume 240 und 242 wodurch Druckmittel aus diesen zur Reifenkavität 24 gefördert wird.

Die Druckräume 240 und 242 sind über ein Rückschlagventil 272 mit der Reifenkavität 24 verbunden. Das Rückschlagventil 272 öffnet dabei zur Reifenkavität 24 hin.

Erreicht der Druck des Druckmittels in der Reifenkavität 24 einen Sollwert oder überschreitet diesen, so schließt das Kupplungsventil 270 und der Leitungsabschnitt 268 zwischen Kupplungsventil 270 und den Druckräumen 252 wird über ein Entlastungsventil 274 entlüftet. Hierdurch bewegen sich die aktuierbaren Kontaktelemente 246 aufgrund ihrer Vorspannung von der Zylinderwulstkurve 250 weg in die in Figur 48 gezeigte Stelle.

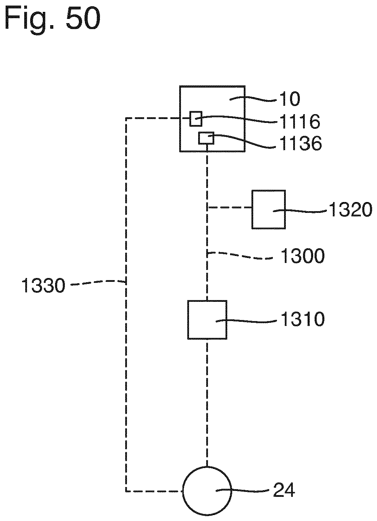

Nachfolgend wird eine Verbindung der Verdichteranordnung 10 mit weiteren Komponenten erläutert (Figur 49), sowie eine generelle Ansteuerung der Verdichteranordnung 10 beschrieben (Figur 50). Diese Beschreibungen lassen sich mit jeglichen Arten von Ausführungen für die Verdichteranordnung 10 kombinieren.

Wie in Figur 49 gezeigt, kann die Verdichteranordnung 10 allgemein mit einem Filter 1200 und einer Kontrolleinrichtung 1210 verbunden sein. Der Filter 1200 ist dabei vorzugweise derart angeordnet, dass er fluidisch vor den Druckmitteleinlässen bzw. Lufteinlässen der Verdichteranordnung 10 angeordnet ist.

Über eine Messverbindung 1220 kann die Kontrolleinrichtung 1210 erfassen, wenn der Filter 1200 verstopft ist. Wird eine Verstopfung des Filters 1200 durch die Kontrolleinrichtung 1210 erfasst, so kann der Filter dadurch gereinigt werden, dass er in umgekehrter Strömungsrichtung mit Druckmittel bzw. Luft beaufschlagt wird. In der üblichen Betriebsweise der Verdichteranordnung 10 wird Luft über den Filter 1200 in Richtung der Verdichteranordnung 10 und von dort zur Reifenkavität 24 gefördert. In einem Reinigungsvorgang wird Druckmittel bzw. Luft entweder aus der Reifenkavität 24 abgelassen und in umgekehrter Strömungsrichtung durch den Filter 1200 gefördert oder die Verdichteranordnung 10 nimmt ihren Betrieb auf und fördert Druckmittel statt zur Reifenkavität 24 in umgekehrter Strömungsrichtung zum Filter 1200. Hierzu saugt die Verdichteranordnung 10 Druckmittel über einen zusätzlichen Einlass 1230 ein, der einen weiteren Luftfilter 1240 aufweist, der in ähnlicher Weise gereinigt werden kann.

Vorteilhafterweise kann die Kontrolleinrichtung 1210 zur Messung und/oder Anzeige des Drucks, der Temperatur und/oder der Feuchtigkeit des Druckmittels in der Reifenkavität 24 dienen, wobei diese Funktionen unabhängig von den weiteren Funktionen der Kontrolleinrichtung 1210 sind.

In Figur 50 ist eine beispielhafte Variante der Ansteuerung der Kupplungseinrichtung 1136 dargestellt. Die Betätigung der Kupplungseinrichtung 1136 kann jedoch auch elektrisch elektromagnetisch oder elektromechanisch erfolgen. Hierzu kann elektrische Energie von der Hauptbatterie 3 des Fahrzeugs 1 oder von einem dort vorgesehenen Generator oder einer anderen Energiequelle, über Schleifkontakte zur Nabenseite geführt werden.

Denkbar ist jedoch auch die Anordnung eines Generators auf der Nabenseite, der elektrische Energie aus der rotatorische Relativbewegung zwischen Nabenseite und Radträgerseite gewinnt. Ebenso denkbar ist die Anordnung von Akkumulatoren auf der Nabenseite insbesondere in den Speichen der Felge 12.

Die Verdichteranordnung 10, insbesondere deren Kupplungseinrichtung 1136 ist über eine Kupplungsdruckmittelleitung 1300 mit der Reifenkavität 24 verbunden. In der Kupplungsdruckmittelleitung 1300 ist ein Kupplungsventil 1310 angeordnet. An der Kupplungsdruckmittelleitung 1300 ist überdies ein Entlastungsventil 1320 vorgesehen. Die Kompressionsräume 1116 der Verdichteranordnung 10 sind über eine zur Förderung vorgesehenen Druckmittelleitung 1330 mit der Reifenkavität 24 verbunden.

Am Kupplungsventil 1310 liegt das Druckmittel der Reifenkavität 24 unter dem im Reifen herrschenden Druck an. Bei Unterschreiten eines Reifendruckschwellenwerts öffnet das Kupplungsventil 1310, wodurch die Kupplungseinrichtung 1136 mittels Druckmittel aus der Reifenkavität 24 betätigt wird und das nabenseitige Getriebeteil 124 ,234 in Zusammenwirkung mit dem radträgerseitigen Getriebeteil 126, 244 gebracht wird.

Fährt das Fahrzeug 1, findet also eine rotatorische Relativbewegung zwischen Nabenseite und Radträgerseite statt, so wird Druckmittel aus den Kompressionsräumen 1116 zur Reifenkavität 24 über die zur Förderung vorgesehene Druckmittelleitung 1330 gefördert.

Die Kupplungsdruckmittelleitung 1300 und die zur Förderung vorgesehenen Druckmittelleitung 1330 können auch gemeinsam als eine einzige Leitung ausgeführt sein.

Bei Überschreiten eines Reifendrucksollwerts, der vorzugsweise über dem Reifendruckschwellenwert liegt, schließt das Kupplungsventil 1310, wodurch die Beaufschlagung der Kupplungseinrichtung 1136 mit Druckmittel unterbrochen wird. Vorzugsweise wird die Kupplungseinrichtung 1136 über das Kupplungsventil 1310 oder das Entlastungsventil 1320 bei Überschreiten des Reifendrucksollwerts entlüftet. Damit wird sichergestellt, dass die Verdichteranordnung 10 ihren Betrieb direkt einstellt sobald ein Druckmittelsollwert in der Reifenkavität 24 erreicht ist.

Diese Betriebsart der Kupplungseinrichtung 1136 ist mit sämtlichen Ausführungsformen und einzelnen Aspekten dieser Ausführungsformen der Verdichteranordnung 10 dieser Anmeldung kombinierbar.

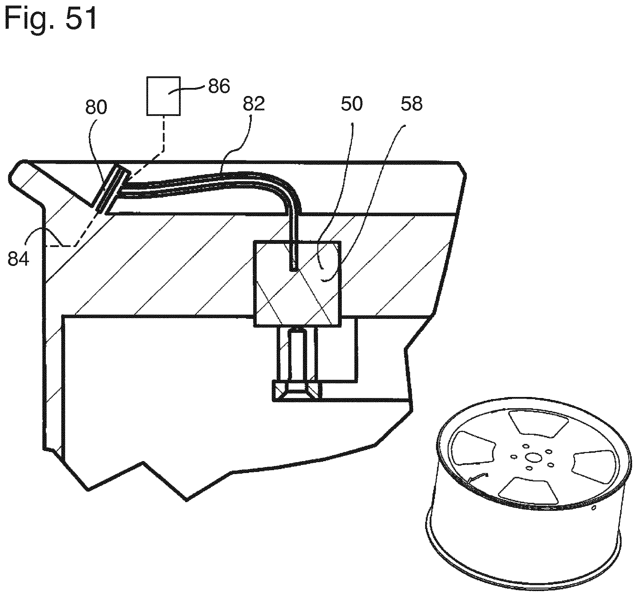

Figur 51 zeigt eine Möglichkeit zur Druckmittelbereitstellung zur Betätigung des Abdeckelements 44. Die Reifenkavität ist über ein Ventil 80 mit Druckmittel befüllbar. Vom Ventil 80 führt ein Abzweig 82 zum Aktuator 50. Ein weiterer Abzweig 84 führt zur Reifenkavität 24. Wird eine Druckmittelquelle an das Ventil 80 angeschlossen, so ist die Reifenkavität 24 über den weiteren Abzweig 84 mit Druckmittel befüllbar. Das Druckmittel steht mit dem in der Reifenkavität herrschenden Druck im Abzweig 82 an und ist über die Schalteinheiten 58 schaltbar.

Das Ventil 80 kann auch eine Steuereinheit 86 umfassen, mit der das Druckmittel derart geschaltet werden kann, dass Abdeckelement 44 sich entweder öffnen oder schließen.

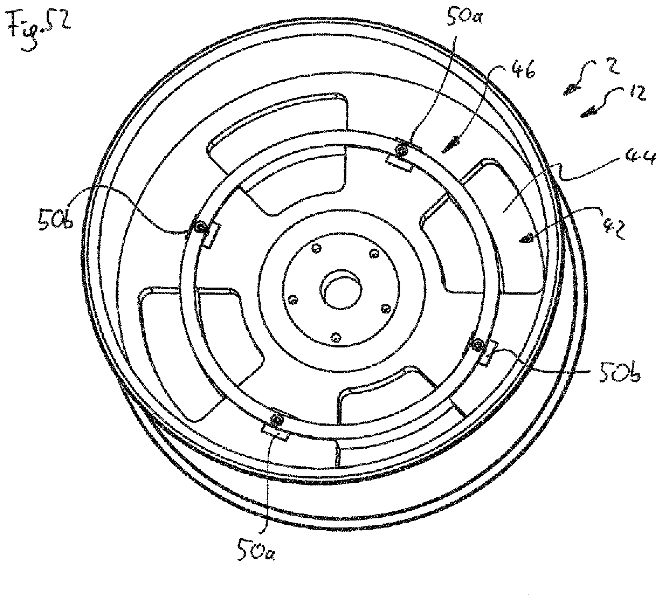

Wie in Figur 52 dargestellt kann die Betätigungseinrichtung 46 eines erfindungsgemäßen Fahrzeugrads 2 zwei Arten von Aktuatoren 50a, 50b aufweisen. Die Aktuatoren 50a der ersten Art führen bei einer Druckmittelbeaufschlagung zu einer Öffnung der Abdeckelemente 44 und die Aktuatoren 50b der zweiten Art führen bei einer Druckmittelbeaufschlagung zu einer Schließung der Abdeckelement 44.

Das derartige vorsehen von Aktuatoren 50 verschiedener Arten (50a, 50b) kann mit sämtlichen in dieser Anmeldung beschriebenen Arten von Fahrzeugrädern kombiniert werden. Hierzu kann beispielsweise eine zentrale Schalteinheit verschiedene Druckmittelleitungen mit Druckmittel beaufschlagen je nachdem welche Art von Aktuatoren angesteuert werden soll.

## Patentansprüche

1. Fahrzeugrad mit einer Felge (12), die einen Nabenabschnitt (38), ein Felgenbett (36) zur Aufnahme eines Reifens, mehrere zwischen dem Nabenabschnitt (38) und dem Felgenbett (36) angeordnete Tragabschnitte (40), wenigstens einen zwischen den Tragabschnitten (40) angeordneten Zwischenraum (42), und wenigstens ein dem Zwischenraum (42) zugeordnetes Abdeckelement (44) aufweist, das durch pneumatische Betätigung von einer ersten Position in eine zweite Position überführbar ist,
**dadurch gekennzeichnet, dass** eine Betätigungseinrichtung (46) zur pneumatischen Betätigung des Abdeckelements (44) mit Druckmittel aus einer Reifenkavität (24) des Fahrzeugrads (2) betätigbar ist.

2. Fahrzeugrad nach Anspruch 1, **dadurch gekennzeichnet, dass** sich ein Druckmittelkanal (52) von der Reifenkavität (24) zu der Betätigungseinrichtung (46) des Abdeckelements (44) erstreckt, insbesondere wobei der Druckmittelkanal (52) wenigstens abschnittsweise, vorzugsweise vollständig im Material der Felge (12), vorzugsweise im Material eines der Tragabschnitte (40), verläuft.

3. Fahrzeugrad nach einem oder mehreren der vorangegangenen Ansprüche, **dadurch gekennzeichnet, dass** es eine Verdichteranordnung (10) zur Bereitstellung von unter Druck stehendem Druckmittel umfasst.

4. Fahrzeugrad nach dem vorangegangenen Anspruch, **dadurch gekennzeichnet, dass** die Verdichteranordnung (10) wenigstens einen nabenseitigen Kompressionsraum (116, 240, 242) umfasst.

5. Fahrzeugrad nach einem der beiden vorangegangenen Ansprüche, **dadurch gekennzeichnet, dass** die Verdichteranordnung (10) ein Verdichterbauteil (118, 238) umfasst und durch eine, vorzugsweise translatorische, Bewegung des Verdichterbauteils (118, 238) das Druckmittel unter Druck setzbar ist.

6. Fahrzeugrad nach dem vorangegangenen Anspruch, **dadurch gekennzeichnet, dass** es um eine Rotationsachse (30) drehbar an einem Radträger (16) lagerbar ist, und die Verdichteranordnung (10) ein Getriebe (120), vorzugsweise ein Kurvengetriebe (122), umfasst, das eingerichtet ist, um durch ein Zusammenwirken eines radträgerseitigen Getriebeteils (126, 244) mit einem nabenseitigen Getriebeteil (124, 234) eine Rotationsbewegung zwischen Radträgerseite und Radnabenseite in eine, vorzugsweise oszillierende translatorische, Bewegung des Verdichterbauteils (118, 238) umzuwandeln.

7. Fahrzeugrad nach einem oder mehreren der vorangegangenen Ansprüche 3 bis 5, **dadurch gekennzeichnet, dass** die Verdichteranordnung (10) elektrisch angetrieben ist.

8. Fahrzeugrad nach Anspruch 7, **dadurch gekennzeichnet, dass** es eine, vorzugsweise kontaktlose, Energieübertragungseinrichtung (6) umfasst, über die elektrische Energie zum Betrieb der Verdichteranordnung (10) von einer radträgerseitigen Energiequelle (3) zur Verdichteranordnung (10) übertragbar ist.

9. Fahrzeugrad nach Anspruch 7 oder 8, **dadurch gekennzeichnet, dass** es eine nabenseitige Energiequelle (7, 8) zur Bereitstellung von elektrischer Energie zum Betrieb der Verdichteranordnung (10) umfasst.

10. Fahrzeugrad nach Anspruch 9, **dadurch gekennzeichnet, dass** die nabenseitige Energiequelle (7, 8) einen Energieerzeuger (8) umfasst, durch den die Rotationsbewegung zwischen Radträgerseite und Radnabenseite in elektrische Energie umwandelbar ist.

11. Fahrzeugrad nach einem oder mehreren der vorangegangenen Ansprüche, **dadurch gekennzeichnet, dass** das Abdeckelement (44) den Zwischenraum (42) in der ersten Position des Abdeckelements (44) weiter bedeckt als in der zweiten Position des Abdeckelements (44), vorzugsweise dass das Abdeckelement (44) den Zwischenraum (42) in der ersten Position des Abdeckelements (44) überwiegend verschließt.

12. Fahrzeugrad nach einem oder mehreren der vorangegangenen Ansprüche, **dadurch gekennzeichnet, dass** das Abdeckelement (44) in eine, vorzugsweise die erste, Position vorgespannt ist,
und/oder dass das Abdeckelement (44) durch eine rotatorische Bewegung gegenüber den Tragabschnitten (40) zwischen der ersten Position und der zweiten Position bewegbar ist,
und/oder dass das Abdeckelement (44) durch eine, vorzugsweise ausschließlich, translatorische Bewegung in Richtung der Rotationsachse (30) gegenüber den Tragabschnitten (40) zwischen der ersten Position und der zweiten Position bewegbar ist.

13. Fahrzeugrad nach einem oder mehreren der vorangegangenen Ansprüche, **dadurch gekennzeichnet, dass** das Abdeckelement (44) durch eine Kippbewegung gegenüber den Tragabschnitten (40) zwischen der ersten Position und der zweiten Position bewegbar ist.

14. Fahrzeugrad nach einem oder mehreren der vorangegangenen Ansprüche, **dadurch gekennzeichnet, dass** es mehrere Zwischenräume (42) aufweist, denen jeweils ein Abdeckelement (44) zugeordnet ist, das durch pneumatische Betätigung von einer ersten Position in eine zweite Position überführbar ist.

15. Fahrzeugrad nach einem oder mehreren der vorangegangenen Ansprüche, **dadurch gekennzeichnet, dass** es eine Kopplungseinrichtung aufweist, über die das Abdeckelement (44) mit einer Bremse eines Fahrzeugs (1), an dem das Fahrzeugrad (2) angeordnet ist, koppelbar ist, wobei die Kopplungseinrichtung (51) dazu ausgebildet ist, eine Betätigungseinrichtung (46) des Abdeckelements (44) derart anzusteuern, dass das Abdeckelement (44) von der ersten Position in die zweite Position überführt wird, in Abhängigkeit von der Betätigung der Bremse und/oder bei Überschreiten einer Temperaturschwelle im Bereich der Bremse.

16. Fahrzeugrad nach einem oder mehreren der vorangegangenen Ansprüche, **dadurch gekennzeichnet, dass** das Abdeckelement (44), vorzugsweise abgestuft, über Zwischenpositionen zwischen der ersten Position und der zweiten Position überführbar ist,
und/oder dass das Abdeckelement (44) in der zweiten Position derart gegenüber dem Tragelement (40) angeordnet ist, dass es im Betrieb des Fahrzeugrades (2) durch die Rotation des Fahrzeugrades (2) Luft zur Bremsanlage leitet.

17. Fahrzeugrad nach einem oder mehreren der vorangegangenen Ansprüche, **dadurch gekennzeichnet, dass** es eine Staubsammelvorrichtung (45) umfasst, die ausgebildet ist, um Staubpartikel aus der im Innenbereich der Felge (12) vorhandenen Luft zu sammeln.

18. Fahrzeugrad nach dem vorangegangenen Anspruch, **dadurch gekennzeichnet, dass** die Staubsammelvorrichtung (45) einen Luftfilter und/oder einen magnetischen Staubsammler umfasst.

19. Fahrzeug mit dem Fahrzeugrad nach einem oder mehreren der vorangegangenen Ansprüche, **dadurch gekennzeichnet, dass** die Position des Abdeckelements (44) durch eine Schalteinheit (58), vorzugsweise in Abhängigkeit von der Geschwindigkeit des Fahrzeugs (1) und/oder einem Betriebszustand der Bremse des Fahrzeugs (1), vorgebbar ist.

## Claims

1. A vehicle wheel having a wheel rim (12) which has a hub portion (38), a rim base (36) for receiving a tire, a plurality of support portions (40) arranged between the hub portion (38) and the rim base (36), at least one interspace (42) arranged between the support portions (40), and at least one cover element (44) associated with the interspace (42), wherein the cover element (44) is adapted to be transferred from a first position into a second position by pneumatic actuation,
**characterized in that** an actuating device (46) for pneumatically actuating the cover element (44) is configured to be subjected to pressure medium from a tire cavity (24) of the vehicle wheel (2).

2. The vehicle wheel as claimed in claim 1, **characterized in that** a pressure medium channel (52) extends from the tire cavity (24) to the actuating device (46) of the cover element (44), in particular wherein the pressure medium channel (52) runs at least in part, preferably completely, in the material of the wheel rim (12), preferably in the material of one of the support portions (40).

3. The vehicle wheel as claimed in one or more of the preceding claims, **characterized in that** it comprises a compressor arrangement (10) for providing pressurized pressure medium.

4. The vehicle wheel as claimed in the preceding claim, **characterized in that** the compressor arrangement (10) comprises at least one hub-side compression chamber (116, 240, 242).

5. The vehicle wheel as claimed in one of the two preceding claims, **characterized in that** the compressor arrangement (10) comprises a compressor component (118, 238) and the pressure medium is configured to be pressurized by a movement, preferably a translational movement, of the compressor component (118, 238).

6. The vehicle wheel as claimed in the preceding claim, **characterized in that** it is configured to be mounted on a wheel carrier (16) to be rotatable about an axis of rotation (30), and the compressor arrangement (10) comprises a gear (120), preferably a cam gear (122), which is adapted to convert a rotational movement between the wheel carrier side and the wheel hub side into a movement, preferably an oscillating translational movement, of the compressor component (118, 238), by cooperation of a wheel-carrier-side gear part (126, 244) with a hub-side gear part (124, 234).

7. The vehicle wheel as claimed in one or more of the preceding claims 3 to 5, **characterized in that** the compressor arrangement (10) is electrically driven.

8. The vehicle wheel as claimed in claim 7, **characterized in that** it comprises an energy transmission device (6), preferably a contactless energy transmission device, *via* which electrical energy for operating the compressor arrangement (10) can be transmitted from a wheel-carrier-side energy source (3) to the compressor arrangement (10).

9. The vehicle wheel as claimed in claim 7 or 8, **characterized in that** it comprises a hub-side energy source (7, 8) for providing electrical energy for operating the compressor arrangement (10).

10. The vehicle wheel as claimed in claim 9, **characterized in that** the hub-side energy source (7, 8) comprises an energy producer (8) by means of which the rotational movement between the wheel carrier side and the wheel hub side can be converted into electrical energy.

11. The vehicle wheel as claimed in one or more of the preceding claims, **characterized in that** the cover element (44) covers the interspace (42) further in the first position of the cover element (44) than in the second position of the cover element (44), preferably wherein the cover element (44) predominantly closes the interspace (42) in the first position of the cover element (44).

12. The vehicle wheel as claimed in one or more of the preceding claims, **characterized in that** the cover element (44) is biased into one position, preferably the first position,
and/or **in that** the cover element (44) is movable between the first position and the second position by a rotational movement relative to the support portions (40),
and/or **in that** the cover element (44) is movable between the first position and the second position by a, preferably solely, translational movement in the direction of the axis of rotation (30) relative to the support portions (40).

13. The vehicle wheel as claimed in one or more of the preceding claims, **characterized in that** the cover element (44) is movable between the first position and the second position by a tilting movement relative to the support portions (40).

14. The vehicle wheel as claimed in one or more of the preceding claims, **characterized in that** it has a plurality of interspaces (42), each of which has an associated cover element (44) which is configured to be transferred from a first position into a second position by pneumatic actuation.

15. The vehicle wheel as claimed in one or more of the preceding claims, **characterized in that** it has a coupling device *via* which the cover element (44) can be coupled with a brake of a vehicle (1) on which the vehicle wheel (2) is arranged, wherein the coupling device (51) is configured to control an actuating device (46) of the cover element (44) in such a manner that the cover element (44) is transferred from the first position into the second position in dependence on the actuation of the brake and/or if a temperature threshold in the region of the brake is exceeded.

16. The vehicle wheel as claimed in one or more of the preceding claims, **characterized in that** the cover element (44) is configured to be transferred between the first position and the second position, preferably in a stepped manner, *via* intermediate positions,
and/or **in that** the cover element (44) in the second position is so arranged relative to the support element (40) that it guides air to the brake system during operation of the vehicle wheel (2) by the rotation of the vehicle wheel (2).

17. The vehicle wheel as claimed in one or more of the preceding claims, **characterized in that** it comprises a dust collecting device (45) which is configured to collect dust particles from the air present in the interior of the wheel rim (12).

18. The vehicle wheel as claimed in the preceding claim, **characterized in that** the dust collecting device (45) comprises an air filter and/or a magnetic dust collector.

19. A vehicle having a vehicle wheel as claimed in one or more of the preceding claims, **characterized in that** the position of the cover element (44) is adapted to be set by a switching unit (58), preferably in dependence on the speed of the vehicle (1) and/or an operating state of the brake of the vehicle (1).

## Revendications

1. Roue de véhicule comprenant une jante (12) qui présente une section de moyeu (38), une base de jante (36) destinée à recevoir un pneu, plusieurs sections de support (40) disposées entre la section de moyeu (38) et la base de jante (36), au moins un espace intermédiaire ménagé entre les sections de support (40), et au moins un élément de recouvrement associé à l'espace intermédiaire (42), ledit élément de recouvrement pouvant passer d'une première position à une seconde position par actionnement pneumatique,
**caractérisée en ce qu'**un dispositif d'actionnement (46) destiné à l'actionnement pneumatique de l'élément de recouvrement (44) peut être actionné par pression provenant d'une cavité de pneu (24) de la roue de véhicule (2).

2. Roue de véhicule selon la revendication 1, **caractérisée en ce qu'**un canal de pression (52) s'étend de la cavité de pneu (24) jusqu'au dispositif d'actionnement (46) de l'élément de recouvrement (44), en particulier le canal de pression (52) s'étend au moins à certains endroits, de préférence entièrement dans le matériau de la jante (12), de préférence dans le matériau d'une des sections de support (40).

3. Roue de véhicule selon l'une ou plusieurs revendications précédentes, **caractérisée en ce qu'**elle comprend un système compresseur (10) destiné à fournir un moyen de pression se trouvant sous pression.

4. Roue de véhicule selon la revendication précédente, **caractérisée en ce que** le système compresseur (10) comprend au moins un espace de compression (116, 240, 242) côté moyeu.

5. Roue de véhicule selon l'une des deux revendications précédentes, **caractérisée en ce que** le système compresseur (10) comprend un composant de compresseur (118, 238) et le moyen de pression peut être mis sous pression par un mouvement de préférence translatoire, du compressant de compresseur (118, 238).

6. Roue de véhicule selon la revendication précédente, **caractérisée en ce qu'**elle peut être montée en rotation autour d'un axe de rotation (30) sur un support de roue (16), et le système de compresseur (10) comprend un entraînement (120), de préférence un entraînement par cames (122) qui est conçu pour transformer par l'interaction entre une partie d'entraînement (126, 244) côté support de roue et une partie d'entraînement (124, 234) côté moyeu un mouvement de rotation entre le côté de support de roue et le côté moyeu en un mouvement de préférence oscillatoire translatoire du composant de compresseur (118, 238).

7. Roue de véhicule selon l'une ou plusieurs revendications précédentes 3 à 5, **caractérisée en ce que** le système compresseur (10) est entraîné électriquement.

8. Roue de véhicule selon la revendication 7, **caractérisée en ce qu'**elle comprend un dispositif de transfert d'énergie (6), de préférence, sans contact, qui permet de transférer l'énergie électrique servant au fonctionnement du système compresseur (10) depuis une source d'énergie côté roue (3) vers le système compresseur (10).

9. Roue de véhicule selon la revendication 7 ou la revendication 8 **caractérisée en ce qu'**elle comprend une source d'énergie (7, 8) côté moyeu pour fournir de l'énergie électrique pour le fonctionnement du système compresseur (10).

10. Roue de véhicule selon la revendication 9, **caractérisé en ce que** la source d'énergie côté moyeu (7, 8) comprend un producteur d'énergie (8) qui permet de convertir le mouvement de rotation entre le côté support de roue et le côté moyeu de roue en énergie électrique.

11. Roue de véhicule selon l'une quelconque ou plusieurs revendications précédentes, **caractérisée en ce que** l'élément de recouvrement (44) recouvre davantage l'espace intermédiaire (42) dans la première position de l'élément de recouvrement (44) que dans la seconde position de l'élément de recouvrement (44), de préférence **en ce que** l'élément de recouvrement (44) referme en grande partie l'espace intermédiaire (42) dans la première position de l'élément de recouvrement (44).

12. Roue de véhicule selon l'une quelconque ou plusieurs revendications précédentes **caractérisée en ce que** l'élément de recouvrement (44) est précontraint dans une position, de préférence dans la première position,
et/ou **en ce que** l'élément de recouvrement (44) peut être déplacé par un mouvement de rotation par rapport aux sections de support (40) entre la première position et la seconde position,
et/ou **en ce que** l'élément de recouvrement (44) peut être déplacé par un mouvement, de préférence exclusivement, de translation dans la direction de l'axe de rotation (30) par rapport aux sections de support (40) entre la première position et la seconde position.

13. Roue de véhicule selon l'une quelconque ou plusieurs revendications précédentes, **caractérisée en ce que** l'élément de recouvrement (44) peut être déplacé par un mouvement de basculement entre la première position et la seconde position par rapport aux sections de support (40).

14. Roue de véhicule selon l'une quelconque ou plusieurs revendications précédentes, **caractérisée en ce qu'**elle présente plusieurs espaces intermédiaires (42) qui sont respectivement associés à un élément de recouvrement (44), qui peut passer d'une première position à une seconde position par actionnement pneumatique.

15. Roue de véhicule selon l'une quelconque ou plusieurs revendications précédentes, **caractérisée en ce qu'**elle présente un dispositif d'accouplement qui permet d'accoupler l'élément de recouvrement (44) à un frein du véhicule (1), dans lequel est montée la roue de véhicule (2), le dispositif d'accouplement (51) étant conçu pour commander un dispositif d'actionnement (46) de l'élément de recouvrement (44) de telle sorte que l'élément de recouvrement (44) puisse passer de la première position à la seconde position, en fonction de l'actionnement du frein et/ou en cas de dépassement d'un seuil de température dans la zone des freins.

16. Roue de véhicule selon l'une quelconque ou plusieurs revendications précédentes, **caractérisée en ce que** l'élément de recouvrement (44) peut passer de la première à la seconde position de manière échelonnée en passant par des positions intermédiaires,
et/ou **en ce que** l'élément de recouvrement (44) est disposé dans la seconde position de telle sorte par rapport à l'élément de support (40) qu'il guide de l'air en direction du système de freinage lorsque la roue de véhicule (2) tourne par rotation de la roue du véhicule (2).

17. Roue de véhicule selon l'une quelconque ou plusieurs revendications précédentes, **caractérisée en ce qu'**elle comprend un dispositif de collecte de poussière (45) qui est conçu pour collecter les particules de poussière provenant de l'air présent à l'intérieur de la jante (12).

18. Roue de véhicule selon l'une revendication précédente, **caractérisée en ce que** le dispositif de collecte de poussière (45) comprend un filtre à air et/ou un collecteur de poussière magnétique.

19. Roue de véhicule selon l'une quelconque ou plusieurs revendications précédentes, **caractérisée en ce que** la position de l'élément de recouvrement (44) peut être prédéfinie par une partie de commutation (58), de préférence en fonction de la vitesse du véhicule (1) et/ou en fonction de l'état de fonctionnement du frein du véhicule (1).
